(19) Europäisches Patentamt

European Patent Office

Office européen des brevets

(11) **EP 0 983 928 A1**

(12) **EUROPEAN PATENT APPLICATION**
published in accordance with Art. 158(3) EPC

(43) Date of publication:
08.03.2000 Bulletin 2000/10

(51) Int. Cl.$^7$: **B62D 6/00**

(21) Application number: 98910974.9

(86) International application number:
PCT/JP98/01299

(22) Date of filing: 25.03.1998

(87) International publication number:
WO 98/52813 (26.11.1998 Gazette 1998/47)

(84) Designated Contracting States:
DE FR GB

(30) Priority: 19.05.1997 JP 12888097
19.05.1997 JP 12888197

(71) Applicant:
KABUSHIKI KAISHA TOYODA JIDOSHOKKI
SEISAKUSHO
Kariya-shi, Aichi-ken (JP)

(72) Inventors:
• ISHIKAWA, Kazuo-Kabushiki Kaisha Toyoda
Jidoshokki
Kariya-shi, Aichi-ken 448-8671 (JP)
• HYODO, Masaya-Kabushiki Kaisha Toyoda
Jidoshokki
Kariya-shi, Aichi-ken 448-8671 (JP)

(74) Representative:
Pellmann, Hans-Bernd, Dipl.-Ing. et al
Patentanwaltsbüro
Tiedtke-Bühling-Kinne & Partner
Bavariaring 4
80336 München (DE)

(54) **STEERING ANGLE CORRECTION DEVICE FOR POWER STEERING DEVICES AND VEHICLES**

(57) A steering angle correction device which corrects a discrepancy between a steering angle and a turning angle of a steering wheel in a power steering device comprising a working oil supply device for ejecting the oil in a quantity corresponding to the extent of turning of the steering wheel and an actuator driven by the working oil ejected from the working oil supply device to steer the steering wheel. In order to correct such a discrepancy, it is necessary to provide a steering angle correction device for power steering devices which can reduce an unnecessary idling of the steering wheel by correcting a steering angle on the basis of an absolute angle from a reference position and reduce the extent of unnecessary input for controlling the steering wheel. Steering angle detecting means detects an actual position of the steering wheel in terms of an angle relative to the reference position, and steering wheel turning angle detecting means detects a turning angle of the steering wheel. A target position as a normal position of the steering wheel is found in terms of a relative angle from the turning angle of the steering wheel by target position calculating means. When a discrepancy between the actual position of the steering wheel and the target position is outside an allowable range, correction means is driven to correct the discrepancy.

**Fig.1**

EP 0 983 928 A1

Printed by Xerox (UK) Business Services
2.16.7/3.6

# Description

## TECHNICAL FIELD

The present invention relates to a device that corrects discrepancies between the steering wheel angle and the vehicle wheel angle of hydraulically power-steered vehicle wheels in vehicles such as forklifts. The steering wheel angle refers to a rotational angle of a steering wheel relative to the position of the steering wheel at which the vehicle travels in a straight line. The vehicle wheel angle refers to the angle defined by a front-to-rear axis of the vehicle and a plane perpendicular to the rotational axis of the vehicle wheels.

## BACKGROUND ART

Power steering apparatus is used for reducing the power required for operating a steering wheel. A typical power steering apparatus is fully hydraulic and includes a power cylinder (steering cylinder). An oil supply device supplies oil to the steering cylinder to assist steering action. The amount of oil supplied to the cylinder is determined in accordance with manipulation amount of the steering wheel.

In an industrial vehicle such as a forklift, the steering wheel has a knob. The knob allows the operator to steer the vehicle with one hand and to manipulate a lever for lifting an object with the other hand simultaneously. The operator judges whether the angle of the vehicle wheels are directed straight ahead by referring to the position of the knob. However, some of the oil discharged from the steering unit is not used to actuate the steering cylinder when the efficiency of the steering unit (orbitrol efficiency) is low. The orbitrol efficiency is lowered, for example, when the steering wheel is rotated slowly. A lowered orbitrol efficiency changes the correspondence between the position of the knob (steering wheel angle) and the vehicle wheel angle. The discrepancy also occurs when oil is leaking from, for example, the steering cylinder. The orbitrol efficiency refers to the correspondence between the manipulation amount of the steering wheel and the amount of oil discharged by the oil supply device. The orbitrol efficiency is represented by dividing the actual displacement amount of oil by the theoretical displacement amount of oil.

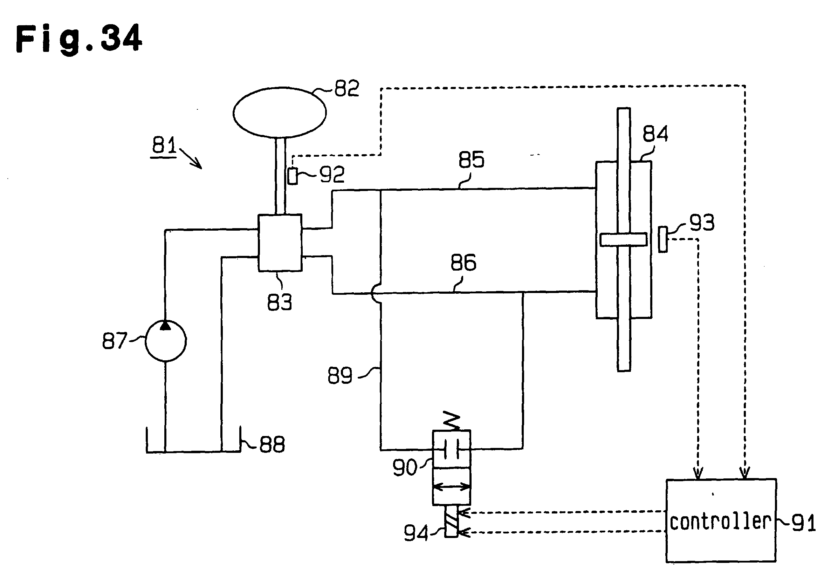

Japanese Examined Patent Publication No. 3-30544 and Japanese Examined Patent Publication No. 4-24270 disclose devices for correcting discrepancies between the steering wheel angle and the vehicle wheel angle. Fig. 34 illustrates the steering wheel angle correction device of the Publication No. 4-24270.

As shown in Fig. 34, a fully hydraulic power steering apparatus 81 includes a steering wheel 82, a steering unit 83, a steering cylinder 84 for steering vehicle wheels (not shown), hydraulic lines 85, 86 and a pump 87. The steering unit 83 is connected with the steering cylinder 84 by the hydraulic lines 85, 86 and is actuated by manipulation of the steering wheel 82. When the steering wheel 82 is rotated, one of the lines 85, 86 supplies oil that is pressurized by the pump 87 to the steering cylinder 84, and the other line returns oil in the cylinder 84 to an oil tank 88. The lines 85, 86 are connected with each other by a drain line 89, which includes an electromagnetic switch valve 90.

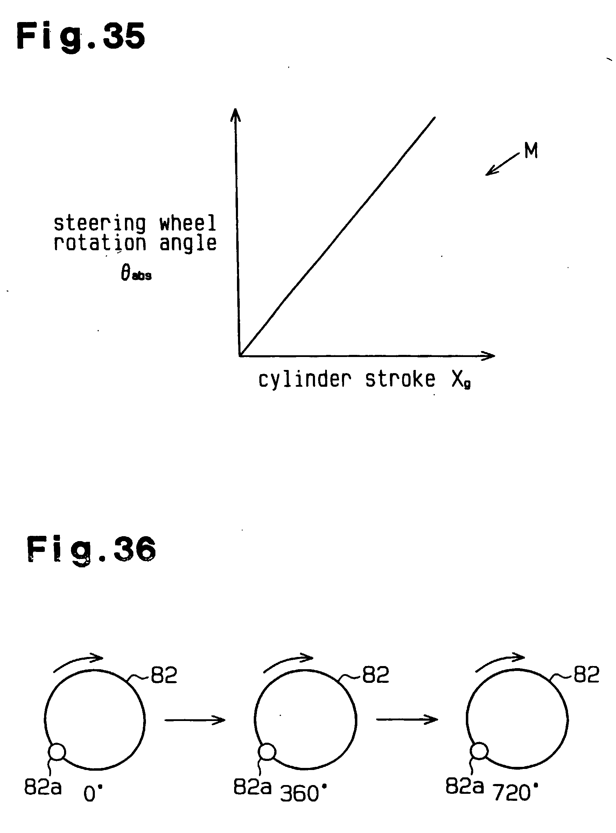

A rotational angle sensor 92 sends a signal that represents the rotational angle of the steering wheel 82 to a controller 91. A cylinder position sensor 93 sends a signal that represents the stroke of the cylinder 84 to the controller 91. The controller 91 computes a target cylinder stroke xg based on a steering wheel rotational angle $\theta abs$, which corresponds to the signal representing the rotational angle of the steering wheel 82 by referring to a map M shown in Fig 35. The controller 91 also computes the actual cylinder stroke x of the steering cylinder 84 based on the signal representing the stroke of the cylinder 84. When the difference between the actual stroke x and the target stroke xg exceeds a predetermined acceptable limit, the controller 91 excites a solenoid 94 of the valve 90 to open the valve 90.

When opened, the switch valve 90 connects the lines 85, 86 with each other by the drain line 89. In this state, some of the oil in one of the lines 85, 86 supplying the oil to the cylinder 84 flows to the other line, which returns oil to the tank 88. This causes the steering wheel 82 to race. During racing, rotation of the steering wheel 82 does not change the angle of the vehicle wheels until the angle of the steering wheel 82 reaches a position corresponding to the actual angle of the vehicle wheels within a predetermined tolerance. In this manner, the target cylinder stroke xg is determined in accordance with the steering wheel angle $\theta abs$. Thus, the steering wheel angle $\theta abs$ must represent the absolute angle of the steering wheel 82, which indicates the number of rotations of the steering wheel 82 from a reference position.

However, steering wheel position corrections performed based on the absolute angle of the steering wheel cause the steering wheel to race excessively. When the discrepancy is 360° or 720°, the knob 82a is at the same position as when there is no discrepancy (for example, a neutral position at which the vehicle travels in a straight line). In this case, correction of the steering wheel angle causes the steering wheel 82 to race for 360° or 720°. That is, steering wheel angle corrections based on the absolute steering wheel angle forces the operator to rotate the steering wheel one or two turns even if the knob 82a is at the right position from the view of the operator. The excessive racing of the steering wheel 82 makes more work for the operator.

If the angle discrepancy is smaller than 360° but greater than 180°, displacing the knob in the direction of the shortest path to the target position will require a smaller amount of rotation than to a case where the knob 82a is returned to the correct position through the path that the knob 82a took when it deviated. However, in the correction procedure based on the absolute steering wheel angle, the knob 82a is returned to the correct position through the path the knob 82a took when it deviated, which increases the amount of rotation of the steering wheel required for the correction. For example, if there is an angle discrepancy of 280°, the discrepancy correction is 280°, although the apparent discrepancy is 80°. The operator is thus required to do more work.

The steering wheel 82 can be rotated two to three turns clockwise and counterclockwise from the reference position (neutral, or straight-ahead position). If the position of the steering wheel 82 is detected as an absolute angle from the reference position by the rotational angle sensor 92, the sensor 92 must detect all the rotational positions (for example, four to six turns) of the steering wheel 82. In this case, four to six turns of the steering shaft supporting the steering wheel 82 must be converted to one turn of the input shaft of the rotational angle sensor 92, which requires a reduction mechanism, such as a worm gear, between the steering shaft and the input shaft. As a result, the detection resolution of the steering wheel angle is reduced.

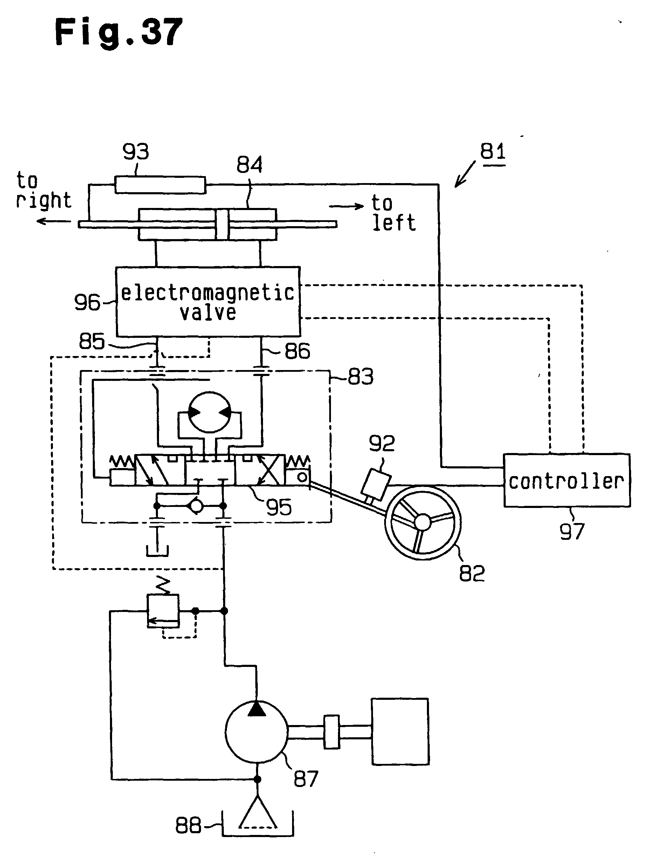

Japanese Examined Utility Model Publication 7-5364 describes a steering wheel angle correction device, which is illustrated in Fig. 37. A power steering apparatus 81 includes a steering unit 83, a steering wheel 82, a steering cylinder 84 for steering vehicle wheels (not shown), hydraulic lines 85, 86 and a pump 87. The steering unit 83 includes a power steering control valve 95, which is actuated by manipulation of the steering wheel 82. The steering unit 83 is connected with the steering cylinder 84 by the hydraulic lines 85, 86. When the steering wheel 82 is rotated, one of the lines 85, 86 supplies oil that is pressurized by the pump 87 to the steering cylinder 84, and the other line returns oil in the cylinder 84 to an oil tank 88. An electromagnetic valve 96 is located in the lines 85, 86.

A rotational angle sensor 92 sends a signal that represents the rotational angle of the steering wheel 82 to a controller 97. A cylinder position sensor 93 sends a signal that represents the stroke of the cylinder 84 to the controller 97. The controller 97 computes a target cylinder stroke xg based on the rotational angle θabs corresponding to the signal that represents the rotational angle of the steering wheel 82. The controller 97 also computes the actual cylinder stroke x of the steering cylinder 84 based on the signal indicating the stroke of the cylinder 84. When the difference between the actual stroke x and the target stroke xg exceeds a predetermined acceptable limit, the controller 97 opens the electromagnetic valve 96.

When the electromagnetic valve 96 is open, some of the oil in one of the lines 85, 86 supplying the oil to the cylinder 84 flows to the other line, which is returning oil to the tank 88. This causes the steering wheel 82 to race. That is, rotation of the steering wheel 82 does not change the angle of the vehicle wheels until the angle of the steering wheel 82 reaches a position corresponding to the vehicle wheel angle within a predetermined tolerance. In this manner, the position of the steering wheel 82, or the angle discrepancy, is corrected.

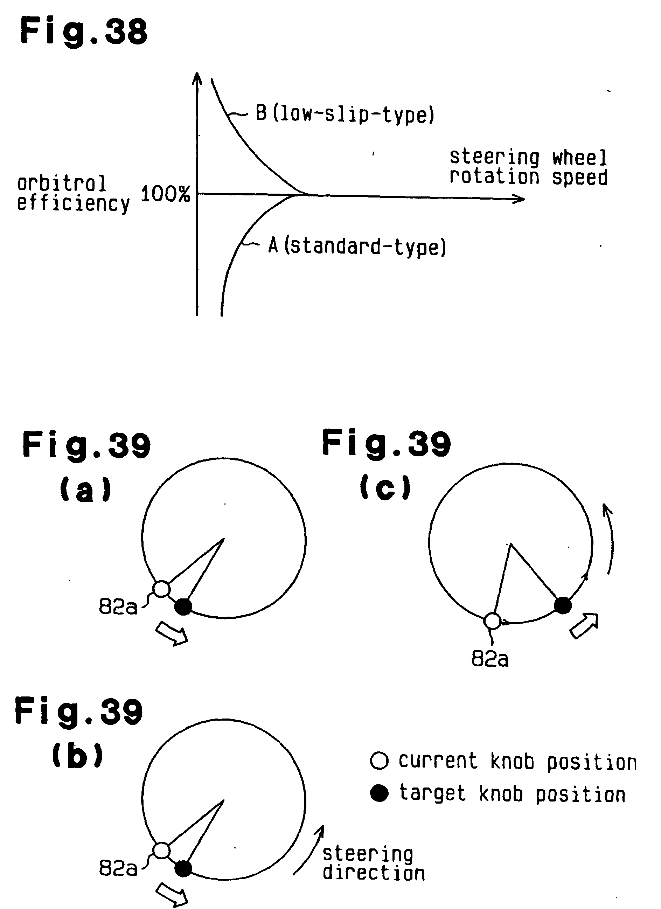

There are two types of steering units (orbitrols), that is, a standard type and a low slip type. Fig. 38 is a graph showing the orbitrol efficiency relative to the rotating speed of steering wheels of a standard type orbitrol and a low slip type orbitrol. As illustrated by line A, the orbitrol efficiency of the standard type orbitrol drops significantly below 100% for lower steering wheel rotation speeds due to oil leakage. As illustrated by line B, the orbitrol efficiency of the low slip type orbitrol increases significantly beyond 100% for lower steering wheel rotation speeds due to oil leakage entering from the outside.

Since the prior art apparatus uses a standard type orbitrol, low speed steering wheel rotation cannot effectively control the vehicle wheels, which disturbs the operator. Thus, when the rotation speed of the steering wheel is low, the steering wheel position is not corrected. For example, the detection data of the rotational angle sensor 92 is differentiated by a differentiating circuit to generate a speed signal, which is proportional to the rotation speed of the steering wheel. If the steering wheel rotation speed is judged to be slower than a predetermined value based on the speed signal, the steering wheel angle position is not corrected.

If a low slip type steering unit is used, the discharge rate of oil exceeds 100% in a low speed region of the steering wheel rotation, which does not disturb the operator. Therefore, discrepancies of the steering wheel can be corrected relatively frequently when the steering wheel is rotated slowly.

However, when the steering wheel is manipulated while the vehicle is not moving, friction between the road surface and the vehicle wheels twists the vehicle wheel. If the oil pressure in the steering cylinder is too low to act against the reaction force of the twisted vehicle wheels when the electromagnetic valve is opened to correct the position of the steering wheel, the vehicle wheels are restoratively pivoted due to the twisting. As a result, the correction of the steering wheel position increases the angle discrepancy of the steering wheel.

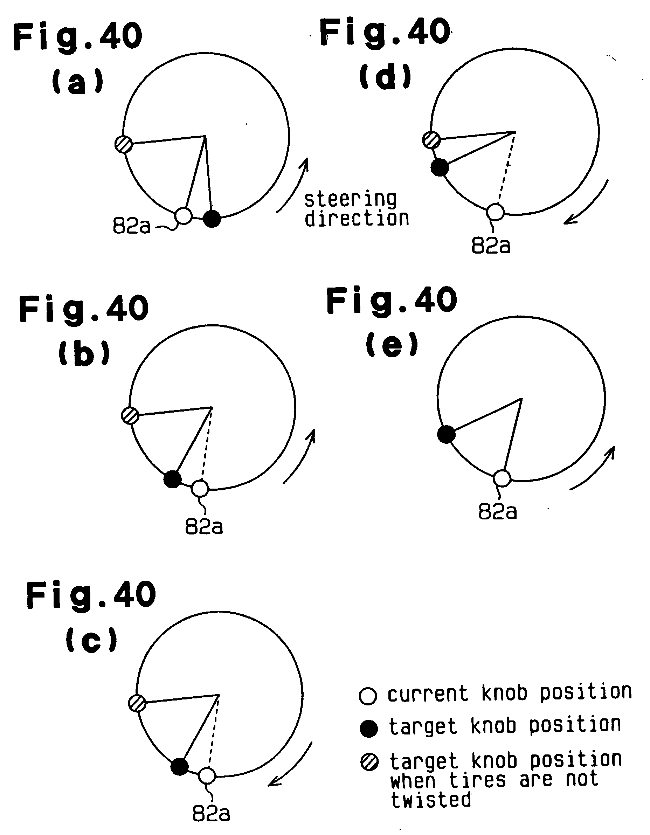

Figs. 40(a) to 40(e) describe this phenomenon. The white circles in Figs. 40(a) to 40(e) represent the current position of the knob. Black circles represent target positions of the knob. Diagonally shaded circles represent target knob positions when the vehicle wheels are not twisted. The target knob position is determined according to the angle of the vehicle wheels. In the following example, the electromagnetic valve is opened to permit the steering wheel to race only when the steering wheel is rotated in a direction such that the knob 82a is moved from the current position to the target knob position by the shortest rotation amount.

Rotating the steering wheel, for example, in the direction of arrow in Fig. 40(a), when the vehicle is not moving twists the vehicle wheels. This displaces the target knob position by the amount of the twisting of the vehicle wheels, or to an apparent target position. If the steering wheel is rotated in the direction of the twisting (the direction of the arrow) in this state, the current knob position approaches the target knob position, which opens the electromagnetic valve. If the vehicle wheels return from the twisted position quickly, closing the valve when the discrepancy is in the acceptable range causes the knob to pass the target knob position, which generates a discrepancy. If the steering wheel is then rotated in the other direction as shown in Fig. 40(c), the steering wheel rotates such that the knob 82a approaches the target position, which opens the electromagnetic valve. As a result, the vehicle wheels pivot to eliminate the twisting as shown in Fig 40(d). This displaces the target knob position away from the current knob position, which increases the angle discrepancy. If the rotation direction of the steering wheel is changed again as shown in Fig. 40(e), the increased discrepancy is maintained. In this manner, when executed for a low slip type steering unit, correction of the knob position can increase the position discrepancy of the steering wheel.

Therefore, as with the standard steering unit, if a low slip type steering unit is used, the knob position must not be corrected when the steering wheel is rotated relatively slowly.

Each vehicle wheel is coupled to a kingpin by a link arm. When the vehicle is turning, the angle defined by the link arm is different in one vehicle wheel from that of the other vehicle wheel, which generates a different moment acting on each vehicle wheel. When the electromagnetic valve is opened when the steering wheel is rotated slowly, and the pressure in the steering cylinder is not high enough to act against the moment difference, the vehicle wheels are oversteered. The oversteering of the vehicle wheels can increase the discrepancy between the current knob position and the target knob position when the electromagnetic valve is opened. The oversteering of the vehicle wheels refers to a state where the steered angle of the vehicle wheels is enlarged when the steering wheel is not manipulated.

Figs. 39(a) to 39(c) show a case where opening of the electromagnetic valve increases the discrepancy of the knob position due to oversteering. When the vehicle is turning, the difference of the moments acting on the right and left vehicle wheels generates a force shown by the blank arrow in a direction of oversteering as shown in Fig. 39(a). In this state, if the knob 82a is slowly moved from the current position to the target position as shown in Fig. 39(b), or in the direction of the arrow, the electromagnetic valve is opened. If the oil pressure in the steering cylinder is too low to act against the force of the oversteered vehicle wheels, the vehicle wheels are pivoted in the direction of oversteering as shown in Fig. 39(c). As a result, the target knob position is moved away from the current knob position, which generates a discrepancy in the position of the knob 82a. The force of the oversteering acting on the vehicle wheels is not as great as the reactive force of twisted vehicle wheels when the vehicle is not moving. However, the force of the oversteering can increase the discrepancy when the electromagnetic valve is opened.

Accordingly, it is a first objective of the present invention to provide a steering wheel angle correction device for power steering apparatus that reduces unnecessary racing of the steering wheel due to correction of the steering wheel position thereby reducing the manipulation amount of the steering wheel.

A second objective of present invention is to provide a steering wheel angle correction device for power steering apparatuses, which, if employed with a low slip type oil supply device, prevents a discrepancy correction of the steering wheel from increasing the angle discrepancy of the steering wheel due to twisting of the vehicle wheels when the vehicle is not moving and also increases the frequency of discrepancy correction without causing malfunctions when the steering wheel is rotated slowly.

Also, a third objective of the present invention is to provide a vehicle that has a steering wheel angle correction device for power steering apparatus that has the above described advantages.

DISCLOSURE OF THE INVENTION

The present invention is designed for a power steering apparatus, which includes an oil supply device and an actuator, the oil supply device discharging oil, the amount of which is proportional to the rotation amount of a steering wheel. The actuator is driven by the oil discharged by the oil supply device to pivot a wheel. To achieve the first objective, the present invention includes steering wheel angle detection means for detecting the actual position of the steering wheel as a relative angle from a reference position, wheel angle detection means for detecting the wheel angle of the wheel, target position computation means for computing a correct position corresponding to the wheel angle as a relative angle from the reference position and setting the computed correct position as a target position, correction means for reducing the actuating amount of the actuator in relation to the manipulation amount of the steering wheel, and control means for controlling the correction means such that the discrepancy between the actual position of the steering wheel and the target position is reduced until the discrepancy is within an acceptable range.

In this aspect, the actual position of the steering wheel is detected as a relative angle from a reference position and the target position is computed as a relative angle based on the wheel angle of the wheel. The position of the steering wheel is corrected such that the actual position of the steering wheel approaches the target position. Compared to a case where the steering wheel is corrected based on an absolute angle of the steering wheel from a reference position, unnecessary racing of the steering wheel is prevented. In other words, unnecessary rotation of the steering wheel is not increased by correction of the steering wheel position.

In another aspect of the present invention, the control means includes target direction detection means for detecting a target direction, in which the steering wheel moves from the actual position to the target position by the shortest path, manipulation direction detection means for detecting the rotation direction of the steering wheel, and first correction execution means for actuating the correction means only when the rotation direction of the steering wheel matches the target direction.

In this aspect, the steering wheel position is corrected only when the rotation direction of the steering wheel matches the target direction. Therefore, if increasing a discrepancy to a one-revolution discrepancy from the steering wheel position represents a smaller rotation amount for correcting the steering position, the correction is executed by increasing the discrepancy to a one-revolution discrepancy. In this case, the steering wheel is corrected by a rotation amount that is smaller than the angle of the actual discrepancy. Accordingly, racing of the steering wheel due to the correction is further reduced.

In another aspect of the present invention, the control means includes discrepancy judgement means for judging whether the discrepancy between the actual position and the target position via the shortest path is greater than a predetermined value and second correction execution means for actuating the correction means regardless of the rotation direction of the steering wheel when the discrepancy judgement means judges that the discrepancy is greater than the predetermined value. When the discrepancy judgment means judges that the discrepancy is equal to or smaller than the predetermined value and the rotation direction matches the target direction, the first correction execution means actuates the correction means.

In this aspect, when the discrepancy in the shortest path between the actual steering wheel position and the target position is greater than a predetermined value, the steering wheel position is corrected regardless of the steering direction of the steering wheel. Thus, the steering wheel position correction is executed more frequently and discrepancies are prevented from increasing. As a result, angle discrepancies of the steering wheel are minimized.

In another aspect of the present invention, when the relative angular discrepancy between the actual position and the target position is equal to or smaller than 180°, the first correction execution means executes the correction only when the steering wheel is rotated in a direction to reduce the discrepancy. When the discrepancy between the actual position and the target position is greater than 180° the first correction execution means executes the correction only when the steering wheel is rotated in a direction to enlarge the discrepancy by one revolution.

In this aspect, when the relative angular discrepancy between the actual steering wheel position and the target position is equal to or smaller than 180°, the target direction is set to a direction to reduce the discrepancy. When the discrepancy is greater than 180°, the target direction is set to a direction to enlarge the discrepancy by one revolution.

In another aspect of the present invention, the correction means is an electromagnetic valve, which is opened and closed by a command from the control means. The electromagnetic valve is located in an oil passage for returning some of the oil discharged from the oil supply device to an oil tank before the oil is supplied to the actuator. Accordingly, the steering wheel is raced by simply opening and closing the electromagnetic valve by the control means.

In another aspect of the present invention, the target position computation means includes memory means for storing a map for obtaining the target position of the steering wheel as a relative position based on the wheel angle of the wheel.

In this aspect, the map is used for obtaining the target steering wheel position as a relative angle based on the steered angle of the wheel. In other words, the target position is not computed as a relative position based on the wheel angle of the wheel. Thus, the computation of the target position is simplified.

In another aspect of the present invention, the steering wheel angle detection means includes a rotation detector. The rotation detector detects the actual position of the steering wheel in the entire range of one revolution of the steering wheel from the reference position. Compared to a case where a potentiometer, which has an undetectable range, the correction is quickly completed by a less rotation of the steering wheel.

In another aspect of the present invention, the steering wheel angle detection means detects the actual position of the steering wheel before and after a predetermined period to obtain an old detection value and a new detection value. The manipulation direction detection means computes the rotation direction of the steering wheel by comparing the old detection value and the new detection value. When the difference between the old detection value and the new detection value is equal to or greater than a predetermined value, which represents a difference that cannot be physically recovered by rotation of the steering wheel, the manipulation direction detection means judges that the steering wheel has passed by the boundary of a detectable range of the steering wheel angle detection means within the predetermined period and judges that the rotation direction of the steering wheel is opposite from the rotation direction computed by comparing the old detection value and the new detection value. In this aspect, even if the steering wheel has passed by the boundary of a detectable range of the steering wheel angle detection means, the rotation direction of the steering wheel is accurately detected.

In another aspect of the present invention, the correct position of the steering wheel corresponds to a wheel angle at which the vehicle travels in a straight line, and the correct position is set as a neutral position of the steering wheel. The steering wheel angle detection means is arranged such that the neutral position of the steering wheel is detected in the vicinity of the center of the detectable range of the steering wheel angle detection means.

In this aspect, the steering wheel is corrected relatively frequently in the vicinity of the neutral position. If the steering wheel angle detection means has an undetectable range, the steering wheel position is substantially always corrected when it is in the vicinity of the neutral position. If the steering wheel angle detection means detects the steering wheel angle in the entire range of one revolution of the steering wheel, the complicated process for correcting the steering wheel angle in the vicinity of the neutral position is avoided.

To achieve the second objective, the oil supply device is a low slip type oil supply device, which increases the discharge rate in a low speed range of the steering wheel rotation. The steering wheel angle correction device further includes correction means for returning some of oil discharged from the oil supply device to an oil tank to cause the steering wheel to race, slow rotation detection means for detecting that the steering wheel rotation speed is lower than a predetermined value, vehicle stop detection means for detecting a stopped state of a vehicle, at which steering the wheel generates friction equal to or greater than a predetermined value between the wheel and the road surface, and first correction prohibition means for prohibiting actuation of the correction means when the slow rotation detection means detects that the steering wheel rotation speed is low and the vehicle stop detection means judges that the vehicle is stopped.

In this aspect, the correction means is not actuated when the steering wheel is being rotated slowly and the vehicle is deemed to be stopped. Therefore, when the vehicle is at a halt with the wheel twisted, the steering wheel discrepancy correction does not enlarge the discrepancy of the steering wheel

In another aspect of the present invention, the slow rotation detection means indirectly detects that the steering wheel angle speed is low based on a change of the wheel angle of the wheel in a predetermined period. In this aspect, the detection data of the wheel angle of the wheel can is used to detect that the steering wheel is being rotated slowly.

In another aspect of the present invention, to achieve the second objective, the oil supply device is a low slip type oil supply device, which has an increased the discharge rate in a low speed range of the steering wheel rotation. The steering wheel angle correction device further includes wheel motion detection means and correction stop means. The wheel motion detection means detects a motion of the wheel that is likely to enlarge a discrepancy of correspondence between the actual position of the steering wheel and the wheel angle of the wheel when the correction means is actuated. The correction stop means detects a discrepancy between the actual position of the steering wheel and the wheel angle of the wheel. When the steering wheel is manipulated in a direction to correct the discrepancy, the correction stop means actuates the correction means. If the wheel motion detection means detects the motion of the wheel when the correction means is actuated, the correction stop means stops the actuation of the correction means.

In this aspect, the correction means is stopped if a motion of the wheel that is likely to enlarge a discrepancy is detected when the correction means is actuated. Therefore, not only when the vehicle is at a halt with the wheel twisted, but also when the vehicle is turning with oversteering, the steering wheel discrepancy correction does not enlarge the discrepancy of the steering wheel

In another aspect of the present invention, the correction stop means actuates the correction means only when the steering wheel is manipulated to approach the target position from the actual position in the direction of the shorter path. In this aspect, if increasing a discrepancy to a one-revolution discrepancy from the steering wheel position represents a smaller rotation amount for correcting the steering position, the correction is executed by increasing the discrepancy to a one-revolution discrepancy. In this case, the steering wheel is corrected by a rotation amount that is smaller than the angle of the actual discrepancy. Accordingly, racing of the steering wheel due to the correction is further reduced.

In another aspect of the present invention, pivoting of the wheel in a direction opposite to the rotation of the steering wheel is defined as a first motion. Pivoting of the wheel in the same direction as and by a greater amount than the rotation of the steering wheel is defined as a second motion. The wheel motion detection means detects at least the second motion. In this aspect, a discrepancy is not enlarged by executing the steering wheel discrepancy correction.

In another aspect of the present invention, the wheel motion detection means detects the first motion and the second motion. In this aspect, the operator is not disturbed by manipulation of the steering wheel when there is oversteering of the wheel.

In another aspect of the present invention, the wheel motion detection means detects the first motion when the target position approaches the actual position and detects the second motion when the discrepancy is enlarged. In this aspect, the data used for correcting a steering wheel discrepancy can be used for detecting the motion of the wheel.

In another aspect of the present invention, the steering wheel angle correction device further includes wheel angle judgement means and second correction prohibition means. The wheel angle judgment means detects whether the wheel angle of the wheel detected by the wheel angle detection means is equal to or greater than a limit angle, which is in the vicinity of an endmost position. The second correction prohibition means prohibits actuation of the correction means when the wheel angle judgment means judges that the wheel angle is equal to or greater than the limit angle.

In this aspect, the correction of the steering position is prohibited before the wheel angle reaches the endmost position. This permits the operator to judge that the wheel is at the endmost position by the resistance transmitted from the steering wheel.

In another aspect of the present invention, the steering wheel angle correction device further includes rotation speed detection means, third correction prohibition means, straight line judgment means and straight range correction execution means. The rotation speed detection means directly or indirectly detects the rotation speed of the steering wheel. The third correction prohibition means prohibits actuation of the correction means when the steering wheel rotation speed is equal or lower than a predetermined value. The straight line judgment means judges whether the wheel angle of the wheel is in a straight range. When the wheel angle is in the straight range, the straight range correction execution means causes the correction means to correct the steering wheel position even if the steering wheel rotation speed is equal or lower than the predetermined value. In this aspect, the wheel angle position is not gradually displaced by the fine-tuning of the wheel angle.

To achieve the third objective of the present invention, a vehicle includes a steering wheel angle correction device for a power steering apparatus.

BRIEF DESCRIPTION OF THE DRAWINGS

Fig. 1 is a diagrammatic view showing a power steering apparatus according to a first embodiment;

Fig. 2 is a diagrammatic view showing a knob position correction;

Fig. 3 is a diagrammatic view like Fig. 2;

Fig. 4 is a diagrammatic view showing an undetectable range of a steering wheel

Fig. 5 is a graph showing a map;

Fig. 6 is graph showing a map used when vehicle wheels are steered to the right;

Fig. 7 is a flowchart showing a first half of a knob position correction routine;

Fig. 8 is a flowchart showing the second half of the routine of Fig. 7;

Fig. 9 is a diagrammatic view showing a power steering apparatus according to a second embodiment;

Fig. 10 is diagrammatic view showing an electric configuration of a steering wheel angle correction device;

Fig. 11 is a partial view showing a rotary encoder;

Fig. 12 is a timing chart of output signals from a rotary encoder;

Fig. 13 is a graph showing a map;

Fig. 14 is graph showing a map used when vehicle wheels are steered to the right;

Fig. 15 is a diagrammatic view showing a knob position correction;

Fig. 16 is a diagrammatic view like Fig. 15;

Fig. 17 is a flowchart showing a first half of a knob position correction routine;

Fig. 18 is a flowchart showing the second half of the routine of Fig. 17;

Fig. 19 is a flowchart of an interrupt routine;

Fig. 20 is a diagrammatic view showing a knob position correction according to a third embodiment;

Fig. 21 is a diagrammatic view like Fig. 20;

Fig. 22 is graph showing a map used when vehicle wheels are steered to the right;

Fig. 23 is a flowchart showing a first half of a knob position correction routine;

Fig. 24 is a flowchart showing the second half of the routine of Fig. 23;

Fig. 25 is a diagrammatic view showing a knob position correction according to a fourth embodiment;

Fig. 26 is a diagrammatic view showing a knob position correction;

Fig. 27 is a flowchart showing a first half of a knob position correction routine;

Fig. 28 is a flowchart showing the second half of the routine of Fig. 27;

Figs. 29 are diagrammatic views showing a knob position correction when a vehicle is not moving;

Fig. 30 is a flowchart showing a first half of a knob position correction routine according to a fifth embodiment;

Fig. 31 is a flowchart showing the second half of the routine of Fig. 30;

Figs. 32 are diagrammatic views showing a knob position correction when a vehicle is turning;

Figs. 33 are diagrammatic views like Fig. 32;

Fig. 34 is a diagrammatic view illustrating a prior art steering apparatus;

Fig. 35 is a graph showing a prior art map;

Fig. 36 is a diagrammatic view showing a steering wheel angle;

Fig. 37 is a diagrammatic view illustrating a prior art steering apparatus;

Fig. 38 is a graph showing efficiency characteristics of orbitrols;

Figs. 39 are diagrammatic views showing a steering wheel discrepancy correction when a vehicle is turning; and

Figs. 40 are diagrammatic views showing a steering wheel discrepancy correction when a vehicle is not moving.

BEST MODE FOR CARRYING OUT THE INVENTION

(FIRST EMBODIMENT)

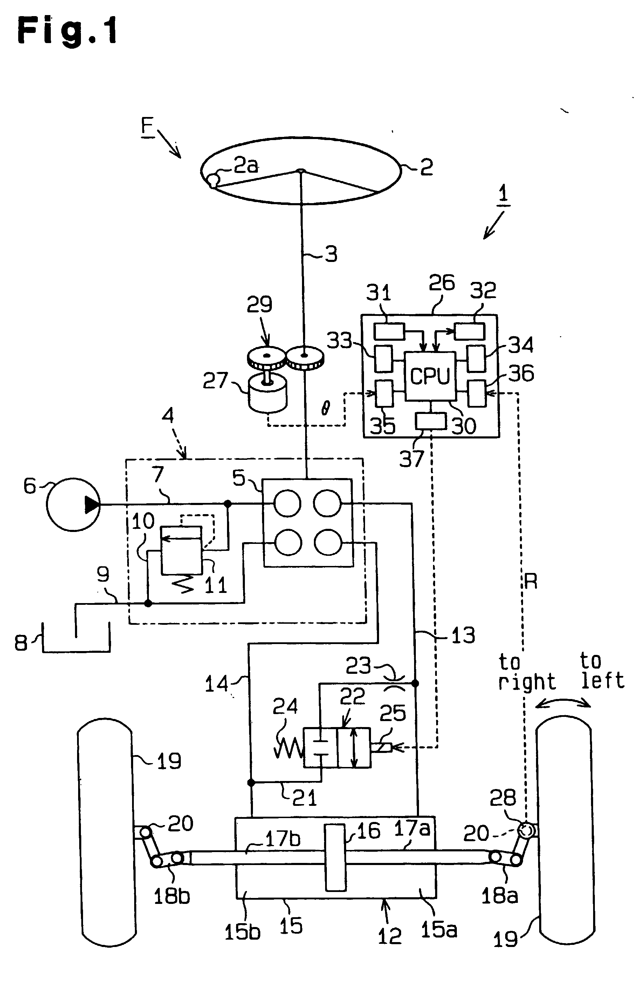

The first embodiment of the present invention will now be described with reference to Figs. 1 to 8.

Fig. 1 shows a power steering apparatus 1 used in a forklift F. The forklift F includes a steering wheel 2, which is rotated by an operator. A knob 2a is located on the steering wheel 2 for facilitating manipulation of the steering wheel 2. The steering wheel 2 is supported on a steering shaft 3. The steering shaft 3 is coupled to an oil supply device, which is a steering unit (orbitrol) 4.

The orbitrol 4 includes a valve unit 5. The valve unit 5 is connected to a hydraulic pump 6 by a supply passage 7 and to an oil tank, or drain tank 8, by a drain passage 9. The pump 6 supplies hydraulic oil to the valve unit 5 through the supply passage 7. The valve unit 5 drains oil to the drain tank 8 through the drain passage 9. The pump 6 is driven by an engine (not shown). The supply passage 7 is connected to the drain passage 9 by a bypass 10. The bypass 10 includes a relief valve 11. The relief valve 11 maintains the pressure of oil supplied from the pump 6 to the valve unit 5 at a predetermined level.

The valve unit 5 is directly operated by the steering shaft 3 and supplies hydraulic oil to a steering cylinder (power cylinder) 12. The amount of oil supplied from the valve unit 5 to the steering cylinder 12 is proportional to the rotation amount of the steering wheel 2. The valve unit 5 is connected to the steering cylinder 12 by a pair of hydraulic lines 13, 14. When the steering wheel 2 is rotated clockwise, the line 13 serves as a supply line for sending hydraulic oil from the pump 6 to the cylinder 12. At this time, the line 14 serves as a return line for returning hydraulic oil to the pump 6. When the steering wheel 2 is rotated counterclockwise, the line 14 serves as a supply line and the line 13 serves as a return line.

The steering cylinder 12 includes a cylindrical housing 15, a piston 16 and a pair of piston rods 17a, 17b. The housing 15 is fixed to the body frame of the forklift F. The piston 16 is reciprocally housed in the housing 15. The piston rods 17a, 17b are secured to the sides of the piston 16 and protrude from the ends of the housing 15. The piston 16 divides the interior of the housing 15 into two chambers 15a, 15b. The hydraulic line 13 is connected to the chamber 15a. The hydraulic line 14 is connected to the chamber 15b.

The distal ends of the piston rods 17a, 17b are coupled to vehicle wheels 19 by link mechanisms 18a, 18b. When the steering cylinder 12 is actuated, the vehicle wheels 19 are pivoted about kingpins 20. The hydraulic lines 13, 14 are connected to each other by a bypass line 21. The bypass line 21 includes a throttle passage 23 and correction means, which is an electromagnetic switch valve 22. When opened, the valve 22 returns some hydraulic oil from the valve unit 5 to the drain tank 8 via the bypass line 21, which reduces the displacement of the piston 16 in the steering cylinder 12. In other words, opening the valve 22 races the steering wheel 2. The racing of the steering wheel 2 corrects the position of the steering wheel 2 by allowing the manipulation amount of the steering wheel 2 to catch up with the steering wheel angle θ of the vehicle wheels 19.

The switch valve 22 is a two-way switch valve. The switch valve 22 is moved between a disconnection position (the state of Fig. 1) and a connection position. At the disconnection position, the switch valve 22 closes the bypass line 21. At the connection position, the switch valve 22 opens the bypass line 21. The valve 22 includes a solenoid 25 and a spool (not shown). The spool is urged by a spring 24 toward the disconnection position. The valve 22 is moved to the connection position when the solenoid 25 is excited and is moved to the disconnection position when the solenoid 25 is de-excited. The solenoid 25 is electrically connected with a controller 26. The controller 26 sends control signals to the solenoid 25 thereby exciting and de-exciting the solenoid 25. If the switch valve 22 is stuck at the connection position due to a malfunction, the throttle passage 23 limits the amount of hydraulic oil flow in the bypass line 21 thereby allowing the vehicle wheels 19 to be steered by manipulation of the steering wheels 2.

The controller 26 is electrically connected to potentiometers 27, 28. The potentiometer 27 functions as steering wheel angle detection means. The potentiometer 28 functions as vehicle wheel angle detection means. The potentiometer 27 includes an input shaft. The input shaft is coupled to the steering shaft 3 via gears 29. The gear ratio of the gears 29 is one. Therefore, the potentiometer 27 detects the relative angle of the steering wheel 2, which represents the angle position in one turn. The potentiometer 27 cannot detect how many turns the steering wheel 2 is rotated from a neutral state. The potentiometer 27 sends a steering wheel angle signal $\theta$, which represents the relative angle of the steering wheel 2 to the controller 26.

The potentiometer 28 is located on the kingpin 20 that supports the right vehicle wheel 19. The potentiometer 28 detects rotation amount of the kingpin 20 and sends a vehicle wheel angle signal R to the controller 26. The signal R represents the vehicle wheel angle of the vehicle wheels 19. The wheel angle of the vehicle wheels 19 will hereafter be referred to as vehicle wheel angle.

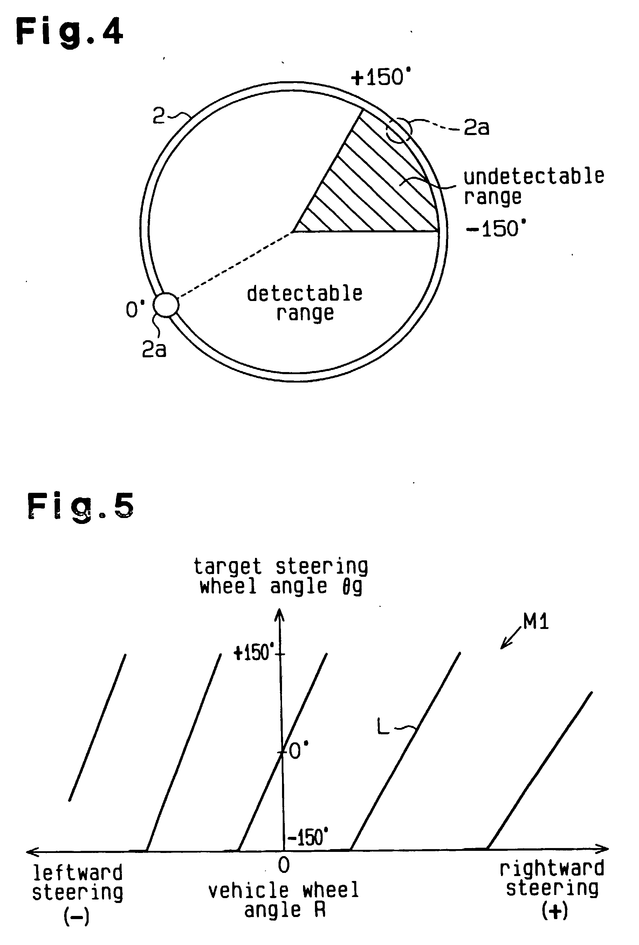

When the steering wheel 2 is at the neutral position, the potentiometer 27 detects the current position of the knob 2a corresponding to the steering wheel angle $\theta$, or $0°$. The neutral position refers to a position of the steering wheel 2 when the vehicle wheel angle $\theta$ of the vehicle wheels 19 is $0°$. In a typical potentiometer, part of a whole turn ($360°$) of the input shaft is not subjected to the detection. Therefore, when the knob 2a is in $60°$ range shown by diagonal shading in Fig. 4, the position of the knob 2a is not detected. Thus, in this embodiment, a detection value when the potentiometer 27 detects the knob position corresponding to the neutral position of the steering wheel 2 is set at a position opposite from the undetectable range, or at the center of the detectable range. As a result, the position of the knob 2a is corrected when the knob 2a is at the neutral position.

The controller 26 includes a central processing unit (CPU) 30, memory means, which is a read only memory (ROM) 31 in this embodiment, a random access memory (RAM) 32, a clock circuit 33, a counter 34, analog-to-digital converters 35, 36 and an exciter 37. The CPU 30 functions as target position computation means, control means, manipulation direction detection means, target direction detection means, first correction means, discrepancy judgment means and second correction means. The ROM 31 functions as the target position computation means. The exciter 37 functions as the control means. Signals $\theta$ and R from the potentiometer 27, 28 are sent to the CPU 30 via the analog-to-digital converters 35, 36, which convert the signals to eight-bit AD values (0 to 255). The CPU 30 receives the AD values as the steering wheel angle $\theta$ and the vehicle wheel angle R. AD values refer to binary numbers representing decimal numbers. For example; zero is represented by 00000000, and two-hundred fifty-five is represented by 11111111.

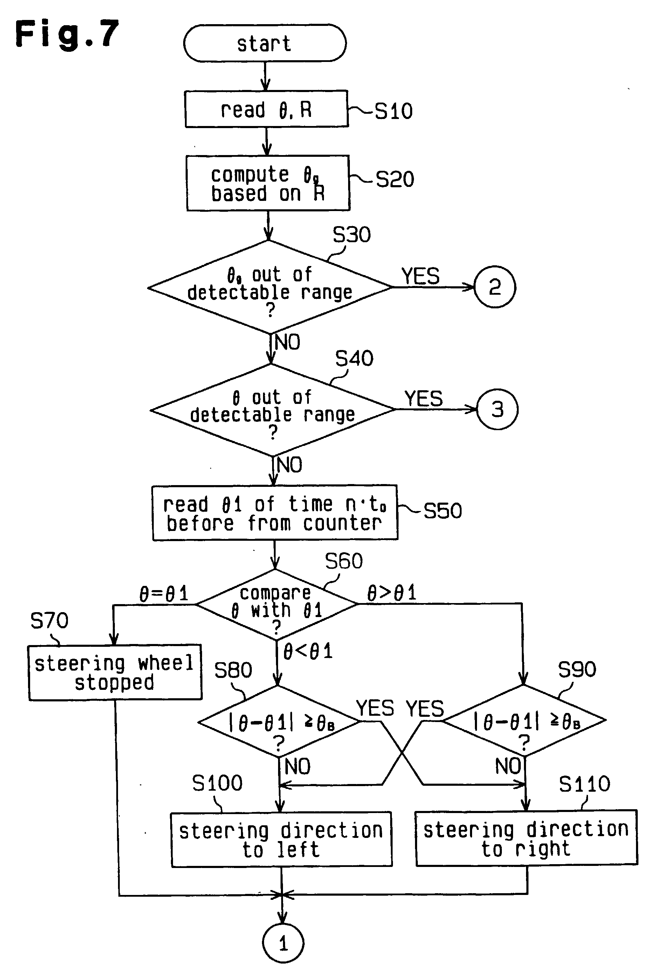

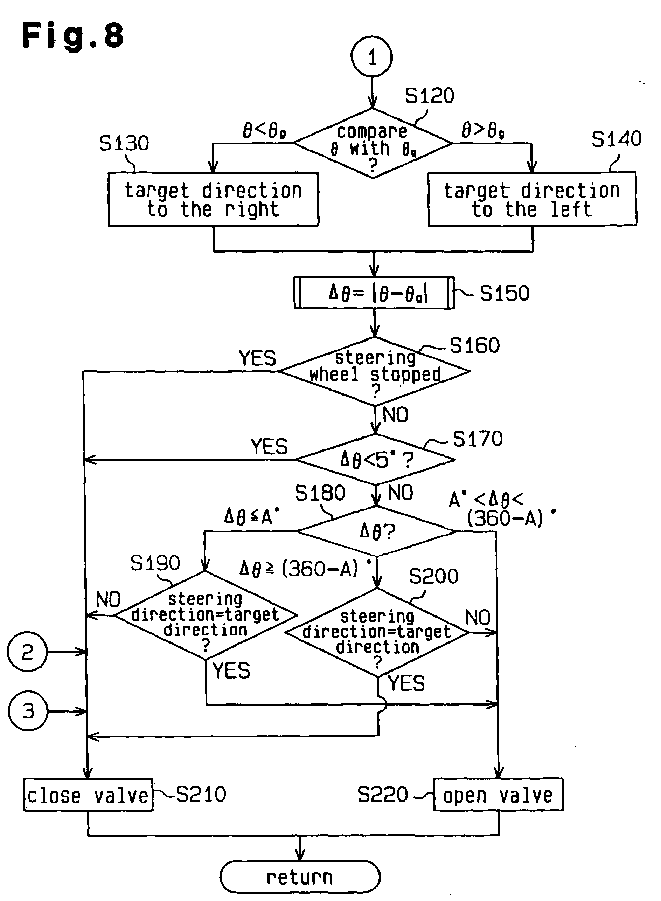

The ROM 31 stores programs executed by the CPU 30. Figs. 7 and 8 show a flowchart representing one of the programs. The flowchart shows a knob position correction routine. Step S20 functions as the target position computation means. Steps S50 to S110 function as the manipulation direction detection means. Steps 120 to S140 and steps S180 to S200 function as the target direction detection means. Step S180 functions as the discrepancy judgment means. Steps S180 to S220 function as the first correction execution means. Steps S180 and S220 function as the second correction execution means.

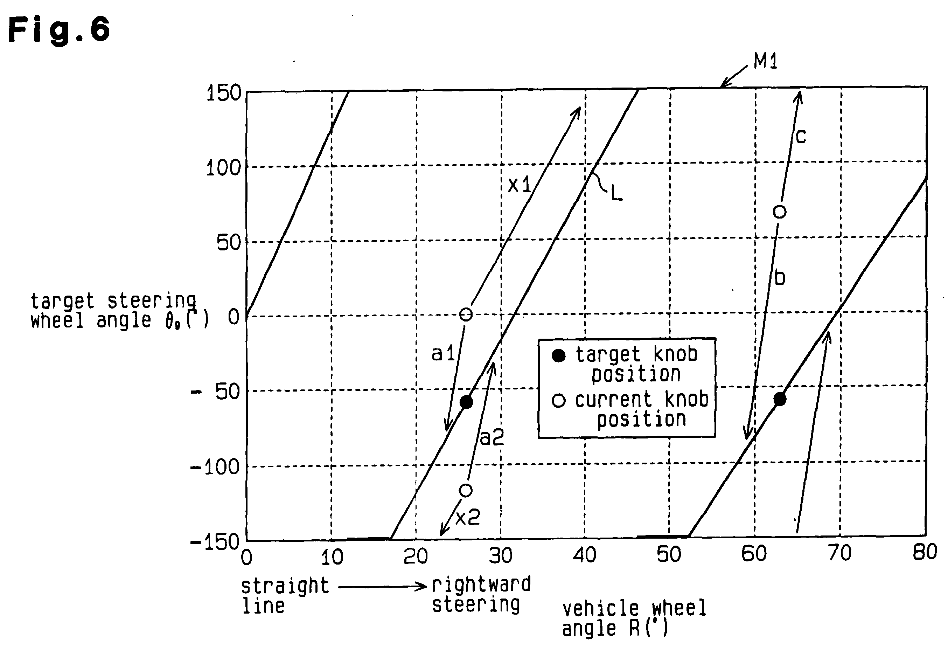

The ROM 31 stores map M1 shown in Figs. 5 and 6. The map M1 is used for computing a target steering wheel angle $\theta g$, which is a normal steering wheel angle, based on the vehicle wheel angle R. The target steering wheel angle $\theta g$ is represented as a relative angle of the steering wheel 2. The graph of Fig. 6 shows a part of Fig. 5 that corresponds to rightward pivoting of the vehicle wheel. In the map M1 of Figs. 5 and 6, when the steering wheel angle $\theta g$ is $0°$, the AD value of the vehicle wheel angle R is one hundred twenty-eight. When the wheels 19 are pivoted to the right, the value of the vehicle wheel angle R is positive. When the wheels 19 are pivoted to the left, the value of the vehicle wheel angle R is negative. When the steering wheel angle $\theta g$ is $0°$, the AD value of the steering wheel angle $\theta g$ is one hundred twenty-eight. Target lines L are defined in a range of $-150°$ to $150°$ of the target steering wheel angle $\theta g$. The locations of the target lines L are determined on the assumption that the orbitrol efficiency (the actual oil displacement amount divided by the theoretical oil displacement amount) is 100%. In the range of the vehicle wheel angle R corresponding to the undetectable range, the target steering wheel angle $\theta g$ is set to -150 degrees, that is, the AD value is set to zero. Only the detectable range of the potentiometer 28 is used for detecting the vehicle wheel angle R. Therefore, the vehicle wheel angle R is detected in the entire range of the pivoting of the wheels 19.

The RAM 32 temporarily memorizes results of computations by the CPU 30. The CPU 30 executes the knob position correction shown in Figs. 7 and 8 at predetermined time intervals $t_o$ (for example, ten milliseconds) based on clock signals from the clock circuit 33.

The CPU 30 stores the steering wheel angle θ in the counter 34 every time the knob position correction is executed. The counter 34 stores data of the steering wheel angle θ in a several previous routines. The CPU 30 sends control signals to the exciter 37 for exciting or de-exciting the solenoid 25.

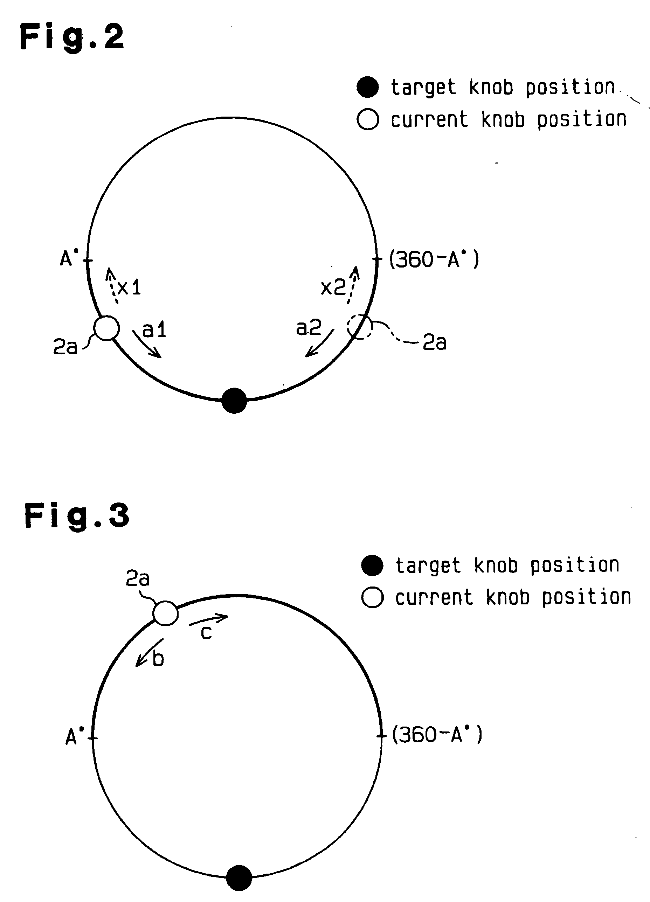

In the knob position correction, the CPU 30 computes the angle difference Δθ between the steering wheel angle θ and the target angle θg, which is obtained based on the vehicle wheel angle R. The CPU 30 executes the knob position correction to decrease the angle difference Δθ to below an acceptable value (for example, about 5°). When the angle difference Δθ is equal to or smaller than A° as shown in Fig. 2, that is, when either an equation approximately $5° \leqq \Delta\theta \leqq A°$ or $\Delta\theta \geqq (360-A)°$ is satisfied, the knob position correction is executed if the steering wheel 2 is being rotated in a direction such that the current knob position approaches the target knob position by the shortest rotation amount. A direction in which the current knob position approaches the target knob position by the shortest rotation amount will hereafter be referred to as the target direction. When the discrepancy between the current knob position and the target knob position is greater than the angle A°, that is, when the inequality $A° < \Delta\theta < (360-A)°$ is satisfied, the knob position correction is executed if the steering wheel 2 is rotated either to the right or to the left.

Racing the steering wheel 2 by a great amount during a knob position correction raises a possibility that the angle discrepancy will become greater after the correction. The use of the predetermined angle A° lowers this possibility. That is, when the angle discrepancy is greater than the angle A° and the steering wheel 2 is rotated in a direction opposite to the target direction, the correction is more likely to reduce the angle discrepancy than to increase the discrepancy. An acceptable range of the angle A° is between 40° to 180°, a preferable range is between 60° to 160°. The most preferable range is between 80° to 120°. If the value A° is smaller than 60°, the knob position correction may increase the discrepancy. If the value A° is larger than 160°, the knob position correction is not executed frequently enough. If the angle A° is between 80° to 120°, the discrepancy is not increased and the frequency of correction is increased.

The operation of the power steering apparatus 1 will now be described.

While operating the forklift F, the operator holds the knob 2a for manipulating the steering wheel 2. When the steering wheel 2 is rotated, the steering shaft 3 is integrally rotated with the steering wheel 2. This causes the valve unit 5 to supply hydraulic oil to the steering cylinder 12. The amount of the supplied oil corresponds to the rotation amount of the steering wheel 2. As a result, the vehicle wheels 19 are pivoted by an amount corresponding to the rotation amount of the steering wheel 2. A slow rotation speed of the steering wheel 2 lowers the orbitrol efficiency. The lowered orbitrol efficiency, or oil leakage in the steering cylinder 12, may displace the position of the knob 2a from the neutral position when the vehicle wheels 19 are in the straight position, or when the steering wheel angle θ is 0°. The knob position correction procedure is executed for reducing the discrepancy to an acceptable level by putting the actual knob position back to the normal position, which is associated with the actual wheel angle. Accordingly, the operator will know the steering wheel angle θ of the vehicle wheels 19 by referring to the position of the knob 2a.

The knob position correction executed by the CPU 30 will now be described with reference to flowcharts of Figs. 7 and 8. The electromagnetic switch valve 22 is initially at the disconnection position.

When the engine of the forklift F is running, the CPU 30 inputs the steering wheel angle signal θ detected by the potentiometer 27 via the analog-to-digital converter 35. The CPU 30 also inputs the vehicle wheel angle R of the vehicle wheels 19 detected by the potentiometer 28 via the analog-to-digital converter 36.

At step 10, the CPU 30 reads the steering wheel angle θ and the vehicle wheel angle R. At step 20, the CPU 30 computes a target steering wheel angle θg based on the vehicle wheel angle R referring to the map M1 of Figs. 5 and 6.

At step 30, the CPU 30 judges whether the target steering wheel angle θg is in the undetectable range. Specifically, the CPU 30 judges whether the target angle θg is -150°. The value 150° of the target angle θg means that the value θg is in the undetectable range. If the equation θg=-150° is not satisfied, the CPU 30 moves to step 40. At step 40, the CPU 30 judges whether the steering wheel angle θ is in the undetectable range. Specifically, the CPU 30 judges whether the AD value of the steering wheel angle θ is zero.

If the determinations at steps 30 or 40 are positive, the CPU 30 moves to step 210 and sends a de-excitation signal to the exciter 37. Accordingly, the exciter 37 de-excites the solenoid 25 of the electromagnetic valve 22. Therefore, if at least one of the steering wheel angle θ and the target steering wheel angle θg is in the undetectable range, the valve 22 is moved to the disconnection position and the knob position correction procedure is not executed. If the determinations in steps 30 and 40 are negative, the CPU 30 moves to step 50.

At step 50, the CPU 30 reads the steering wheel angle θ corresponding to a predetermined time that was $n \cdot t_o$ units of time earlier, that is, the CPU 30 reads the steering wheel angle θ1 from the counter 34. The symbol $t_o$ is an interval between each knob correction and is, for example, ten milliseconds. The symbol n is a natural number. Next, at step 60, the CPU 30 compares the current steering wheel angle θ and the steering wheel angle θ1 of the time period $n \cdot t_o$ earlier. If the θ is equal to θ1 (θ=θ1), the CPU 30 moves to step 70. At step 70 judges that the steering wheel 2 is not rotating and stores the determination in a predetermined memory area in the RAM 32. If the θ is smaller than θ1, the CPU 30 moves to step 80. When the angle θ is greater than the angle θ1, the CPU 30 moves to step 90. In steps 80, 90, the CPU 30 judges whether the equation $|\theta - \theta1| \geqq \theta B$ is satisfied. The value θB is larger than an angle through which the operator can rotate the steering wheel 2 in the time period $n \cdot t_o$.

When the change of the steering wheel angle θ in the time period $n \cdot t_o$ is within the detectable range, the steering wheel 2 is judged to be rotating clockwise if the value θ is greater than the value θ1 (θ>θ1) and is judged to be rotating counterclockwise if the value θ is smaller than the value θ1 (θ<θ1). The rotation direction of the steering wheel 2 will hereafter be referred to as steering direction. However, when the steering wheel 2 has passed the undetectable range during the time period $n \cdot t_o$, during which the steering wheel angle changed from θ1 to θ, the steering wheel 2 is judged to be rotating to the left if the value θ is greater than the value θ1 (θ>θ1) and is judged to be rotating to the right if the value θ is smaller than θ 1 (θ<θ1). That is, the correspondence between the steering direction and the values θ, θ1 is inverted. Therefore, when the rotation amount of the steering wheel 2 (|θ-θ1|) is equal to or greater than θB, (for example, 50°), the CPU 30 judges that the steering wheel 2 is being rotated through the undetectable range and determines the steering direction accordingly.

Therefore, after judging that θ is smaller than θ1 (θ<θ1), the CPU 30 moves to step 80. At step 80, the CPU 30 judges whether the equation $|\theta - \theta1| \geqq \theta B$ is satisfied. If the equation is not satisfied, the CPU 30 moves to step 100 and judges that the steering direction is to the left. If the equation is satisfied, the CPU 30 moves to step 110 and judges that the steering direction is to the right. Also, after judging that θ is greater than θ1 (θ>θ1), the CPU 30 moves to step 90. At step 90, the CPU 30 judges whether the equation $|\theta - \theta1| \geqq \theta B$ is satisfied. If the equation is not satisfied, the CPU 30 moves to step 110 and judges that the steering direction is to the right. If the equation is satisfied, the CPU 30 moves to step 100 and judges that the steering direction is to the left.

At step 120, the CPU 30 compares the current steering wheel angle θ with the target steering wheel angle θg. If the angle θ is smaller than the angle θg, (θ<θg), the CPU 30 moves to step 130. At step 130, the CPU 30 judges that the target direction is to the right. If the angle θ is greater than the angle θg, (θ>θg), the CPU 30 moves to step 140 and judges that the target direction is to the left. The target direction in steps 130 and 140 is a provisional target direction computed based on the difference between the steering angle θ and the target steering wheel angle θg and is not necessarily the same as a target direction, in which the knob is moved to the target knob position by the shortest rotation amount. That is, the provisional target direction matches the target direction when the difference Δθ (Δθ=|θ-θg|) is equal to or smaller than the angle A°(Δθ≦ A°). When the difference Δθ is equal to or greater than the difference between 360° and A° (Δθ≧ (360-A)°), the provisional target direction does not match the target direction.

At step 150, the CPU 30 computes the difference Δθ between the current steering wheel angle θ and the target steering wheel angle θg (Δθ=|θ-θg|). In this manner, the steering direction of the steering wheel 2, the provisional target direction and the difference Δθ are computed. At steps subsequent to step 160, the CPU 30 judges whether the solenoid 25 of the electromagnetic valve 22 needs to be excited or de-excited using the computed data.

At step 160, the CPU 30 judges whether the steering wheel 2 is stopped. That is, the CPU 30 consults the predetermined memory area to judge whether the steering wheel 2 was judged to be stopped at step 70. If the steering wheel 2 is stopped, the CPU 30 moves to step 210 de-excites the solenoid 25 to close the electromagnetic valve 22. That is, if the steering wheel 2 is not rotating, opening the electromagnetic valve 22 does not race the steering wheel 2. Thus, the electromagnetic valve 22 is closed. If the steering wheel 2 is not stopped, the CPU 30 moves to step 170.

At step 170, the CPU 30 judges whether the difference Δθ is smaller than the acceptable value (5°). If the inequality Δθ<5° is satisfied, the CPU 30 moves to step 210 and closes the valve 22. If the inequality Δθ<5° is not satisfied, the CPU 30 moves to step 180.

At step 180, the CPU 30 judges the value of the difference Δθ. Specifically, the CPU 30 judges whether the difference between the current knob position and the target knob position is equal to or smaller than the predetermined angle A° or greater than the angle A°. If the equation Δθ≦A° is satisfied, the CPU 30 moves to step 190 and judges whether the steering direction matches the target direction. If the steering direction matches the target direction, the CPU 30 moves to step 220. At step 220, the CPU 30 opens the valve 22. If the steering direction does not match the target direction, the CPU 30 moves to step 210. At step 210, the CPU 30 closes the valve. If the knob 2a is at a position drawn by solid line in Fig. 2, the knob position correction is executed when the knob 2a is moved in direction a1 shown in Figs. 2 and 6, approaching the target position, or when the steering wheel 2 is rotated in the target direction. When the steering wheel 2 is rotated in direction x1, or when the knob 2a is moved away from the target position, the knob position correction is not executed. If the knob 2a is at a position represented by a dotted line in Fig. 2, the knob position correction procedure is executed when the knob 2a is moved in direction a2 shown in Figs. 2 and 6, approaching the target position, or when the steering wheel 2 is rotated in the target direction. When the steering wheel 2 is rotated in direction x2, or when the knob 2a is moved away from the target position, the knob position correction procedure is not executed.

If the equation $\Delta\theta \geqq (360-A)°$ is satisfied at step 180, the CPU 30 moves to step 200. At step 200, the CPU 30 judges whether the steering direction matches the target direction. If the steering direction does not match the target direction, the CPU 30 moves to step 220 and opens the valve 22. If the steering direction matches the target direction at step 200, the CPU 30 moves to step 210 and closes the valve 22. For example, when the undetectable range is between the actual knob position and the target knob position, the difference $\Delta\theta$ is greater than the value $(360-A)°$ based on the steering wheel angle $\theta$ of Fig. 4 even if the actual discrepancy is smaller than the angle $A°$. In this case, the provisional target direction computed by comparing the steering angle $\theta$ and the target steering angle $\theta g$ is greater than $(360-A)°$. Therefore, if the equation $\Delta\theta \geqq (360-A)°$ is satisfied, the knob position correction procedure is executed only when the steering direction does not match the target direction As a result, if the knob correction procedure is executed when the discrepancy between the current knob position and the target knob position is smaller than the angle $A°$, the knob position is corrected by rotating the steering wheel 2 such that the knob 2a approaches the target knob position by the shortest rotation amount. The discrepancy is reduced accordingly.

When the position of the knob 2a is displaced from the target position by one or two turns of the steering wheel 2 in Figs. 2 or 3, only the discrepancy in the relative angle is corrected. Therefore, unlike the prior art, in which the steering wheel angle is represented by an absolute angle, the apparatus of the present embodiment prevents unnecessary racing of the steering wheel 2. For example, if the apparent discrepancy between the current knob position and the target knob position is small, the steering wheel 2 is not rotated by 360°. That is, the knob position correction procedure is not performed by racing the steering wheel 2 by the longer path to correct the discrepancy of an absolute angle.

If the inequality $A° < \Delta\theta < (360-A)°$ is satisfied at step 180, the CPU 30 moves to step 220 and opens the valve 22. That is, if the discrepancy between the current knob position and the target knob position is greater than the angle $A°$, the knob position correction is executed regardless of the rotating direction of the steering wheel 2. For example, if the knob 2a is at the position of Fig. 3, the knob position correction procedure is performed if the steering wheel is rotated in direction b (to the left) or if the steering wheel 2 is rotated in direction c (to the right). Accordingly, the knob 2a approaches to the target position. In this case, if the steering wheel 2 is rotated in direction c of Fig. 3, the angle discrepancy may be enlarged depending on the rotation amount of the steering wheel 2. However, the knob position correction when the angle discrepancy is greater than the angle $A°$ will decrease the angle discrepancy, rather than increase it. As a result, the knob position correction is executed more frequently and an angle discrepancy greater than the angle $A°$ is not left uncorrected. If the steering wheel angle $\theta$ or the vehicle wheel angle R is out of the detectable range, or is in the undetectable range, the knob position correction procedure is discontinued. However, the correction procedure is temporarily discontinued only while the angle $\theta$ is in the undetectable range and is started again when the steering wheel angle passes the undetectable range. Therefore, the discontinuation of the correction causes little problem.

This embodiment has the following advantages.

(1) The knob position of the steering wheel 2 is corrected using relative angles. Therefore, when an angle discrepancy is greater than 360° in absolute angle, the steering angle is corrected by an amount 360° less than the actual discrepancy. For example, if there is an angle discrepancy of 360° or 720°, if the apparent position of the knob 2a matches the target position, the knob correction is not executed. In other words, unnecessary knob position correction and unnecessary racing of the steering wheel 102 is avoided

(2) The direction corresponding to the shorter path between the current knob position and the target knob position is defined as a target direction. The knob position correction procedure is executed only when the rotating direction of the steering wheel 2 matches the target direction. Therefore, when the actual angle discrepancy is 300°, the correction amount is 60°. Also, when the actual angle discrepancy is less than 360°, the knob position correction does not cause the steering wheel 2 to race excessively. Therefore, advantage (2), together with advantage (1), prevents unnecessary rotation of the steering wheel.

(3) When the discrepancy between the current knob position and the target knob position is greater than the angle $A°$, the knob position is corrected regardless of the steering direction of the steering wheel 2. When the discrepancy is smaller than the angle $A°$, the knob position is corrected if the steering direction of the steering wheel 2 matches the target direction. Therefore, when the discrepancy of the steering wheel 2 is relatively large, or greater than the angle $A°$, the discrepancy is minimized.

(4) The target position (target steering wheel angle $\theta g$) is computed as a steering wheel relative angle based on the vehicle wheel angle R referring to the map M1 stored in the ROM 31. Therefore, computation of the target steering wheel angle $\theta g$ is simplified, and the target position is easily computed.

(5) The neutral position of the knob 2a is arranged to be detected in the center of the detectable range of the potentiometer 27, or the position opposite to the undetectable range. Therefore, when the steering wheel 2 is manipulated in the vicinity of the neutral position (straight travel position), the knob position is corrected when necessary without being disturbed by the undetectable range. When the operator tries to return the steering wheel 2 to the neutral position, the steering wheel 2 is very likely to be put back to the neutral position.

(6) The steering wheel angles $\theta1$, $\theta$ represent the rotation amount of the steering wheel. The value $\theta B$ represents an angle, through which the steering wheel 2 cannot be rotated in a certain period. The steering direction is determined based on whether the difference between the angles $\theta1$ and $\theta$ ($|\theta-\theta1|$) is greater than the value $\theta B$. Therefore, even if the steering wheel 2 is rotated to pass through the undetectable range of the potentiometer 27, the steering direction of the steering wheel 2 is accurately detected.

(7) In the prior art apparatus, a steering shaft is coupled to a potentiometer with a speed reducing gear such as a worm gear. However, in this embodiment, the steering shaft 3 is coupled to the input shaft of the potentiometer 27 with the gears 29, the ratio of which is one, which improves the detection accuracy for the steering wheel angle $\theta$.

(SECOND EMBODIMENT)

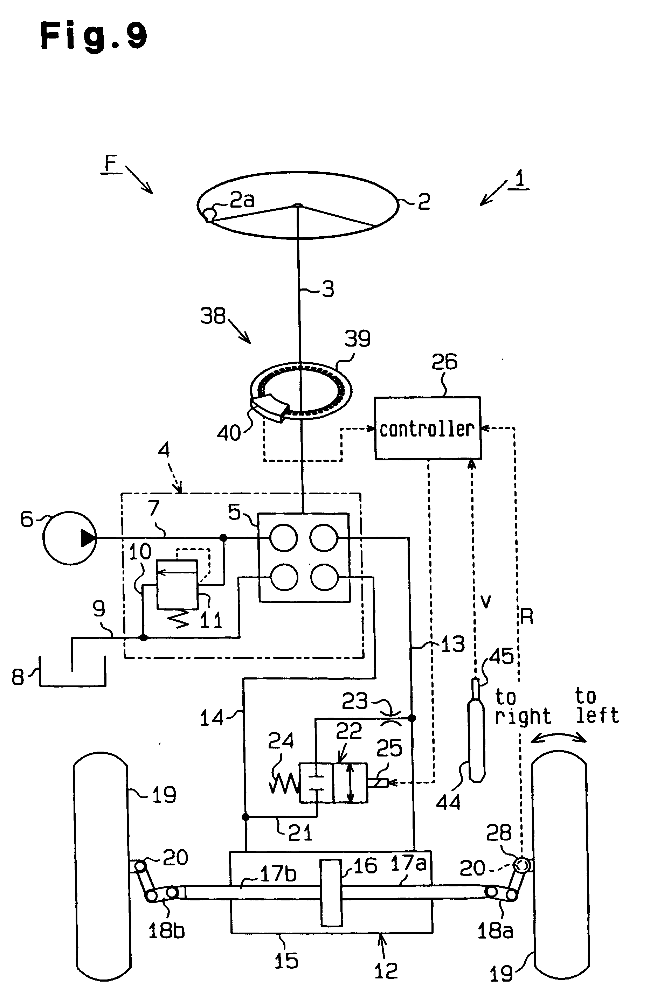

A second embodiment will now be described with reference to Figs. 9 to 19.

Fig. 9 shows a power steering apparatus 1 according to the second embodiment. In this embodiment, instead of a potentiometer, a rotary encoder is used as a detector for detecting the steering wheel angle. Also, the knob position correction is different from that of the first embodiment. The differences from the first embodiment will mainly be discussed below, and like or the same reference numerals are given to those components that are like or the same as the corresponding components of the first embodiment.

A controller 26 is electrically connected to a rotary encoder 38 and to a potentiometer 28. The rotary encoder 38 functions as the steering wheel angle detection means and as steering direction detection means. The encoder 38 includes a disk 39 and a sensor 40. The disk 39 is fixed to and rotates integrally with the steering shaft 3. Slits 39a and a slit 39b are formed in the disk 39. The sensor 40 includes three pairs of photocouplers for detecting the slits 39a and 39b. The detection signals from the sensor 40 are sent to the controller 26.

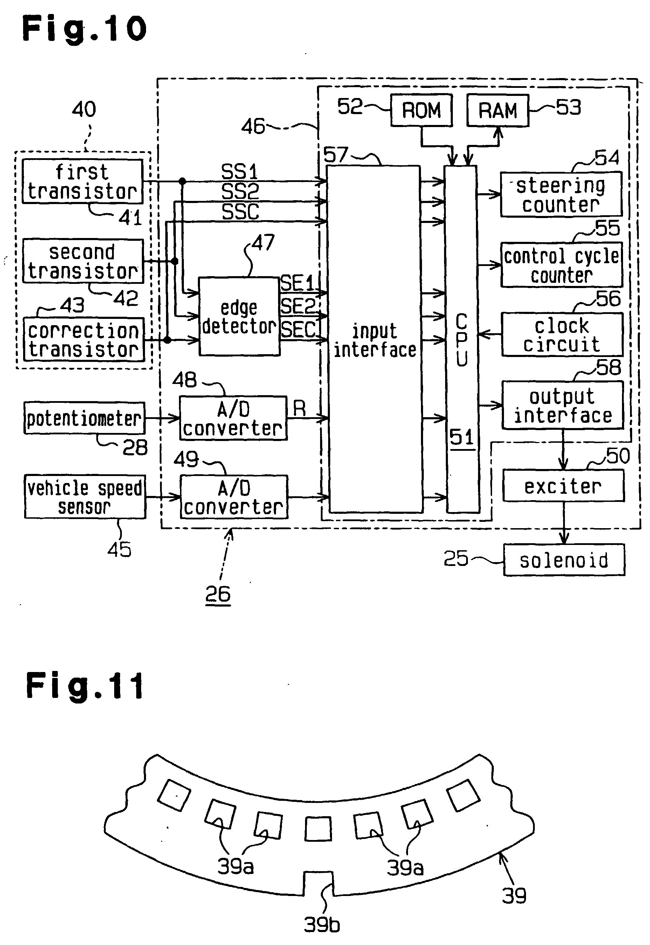

As shown in Figs. 9 and 11, the slits 39a are circumferentially formed in the disk 39 and are equally spaced apart. The number of the slits 39a is forty. The single slit 39b is formed in the periphery of the disk 39 (see Fig 11). The sensor 40 includes a first transistor 41, a second transistor 42 and a correction transistor 43 (see Fig. 10). The transistors 41 to 43 are phototransistors and function as photocouplers.

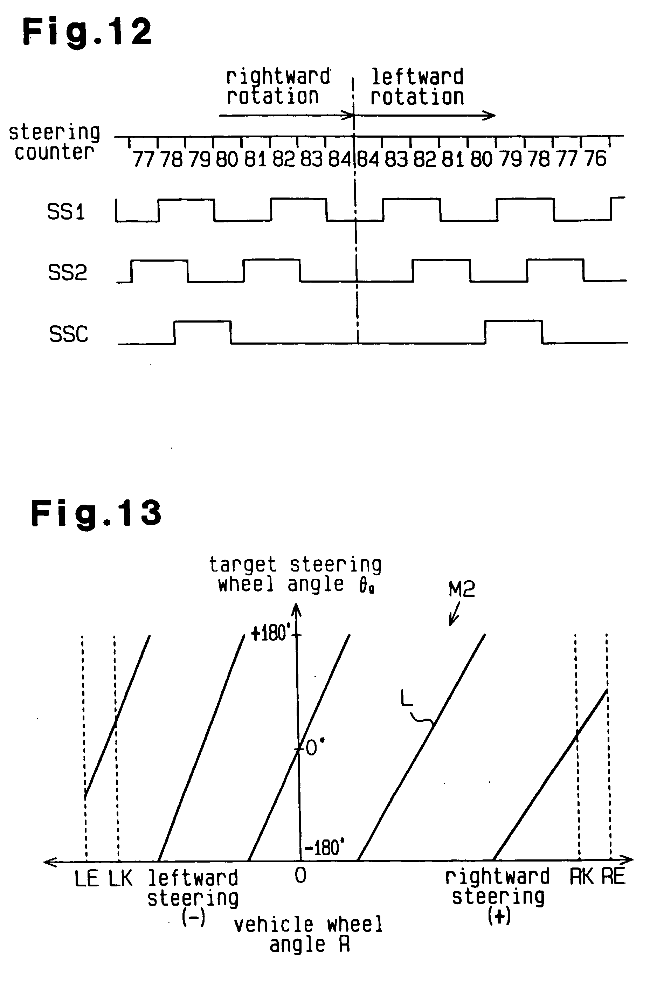

The first and second transistors 41, 42 detect light that passes through the slits 39a. The transistors 41, 42 output detection signals SS1 and SS2 (see Fig. 12), respectively. During one turn of the steering wheel 2, each of the signals SS1 and SS2 is turned on and off forty times. The phases of the signals SS1 and SS2 are offset by 90°. Detecting the edges of the signals SS1 and SS2 allows the rotation angle of the steering wheel 2 to be detected with a resolution of one one-hundred-sixtieth of a turn of the steering wheel 2.

The correction transistor 43 detects light that passes through the slit 39b and outputs detection signal SSC (see Fig. 12). The signal SSC is turned on when the steering wheel 2 is at the neutral position. A steering counter 54 (see Fig. 10) counts the edges of the signals SS1, SS2. The signal SSC is used for correcting the counter value C in the steering counter 54.

The forklift F has drive wheels (not shown). Force is transmitted to the drive wheels by a front differential ring gear 44. A vehicle speed sensor 45 is located in the vicinity of the ring gear 44. The sensor 45 sends a vehicle speed signal v to the controller 26. The frequency of the signal v represents the speed of the forklift F.

As illustrated in Fig. 10, the controller 26 includes a microcomputer 46, an edge detector 47 functioning as the steering wheel angle detection means, analog-to-digital converters 48, 49 and an exciter 50 functioning the control means. The microcomputer 46 includes a central processing unit (CPU) 51, a read only memory (ROM) 52 functioning as the memory means, a random access memory (RAM) 53, the steering counter 54, a control cycle counter 55, a clock circuit 56, an input interface 57 and an output interface 58. The CPU 51 functions as part of the target position computation means, the control means and the manipulation direction detection means. The CPU 51 functions as the discrepancy judgment means, the target direction detection means, the first correction means and the second correction means. The ROM 52 functions as part of the target position computation means. The steering counter 54 functions as part of the steering wheel angle detection means.

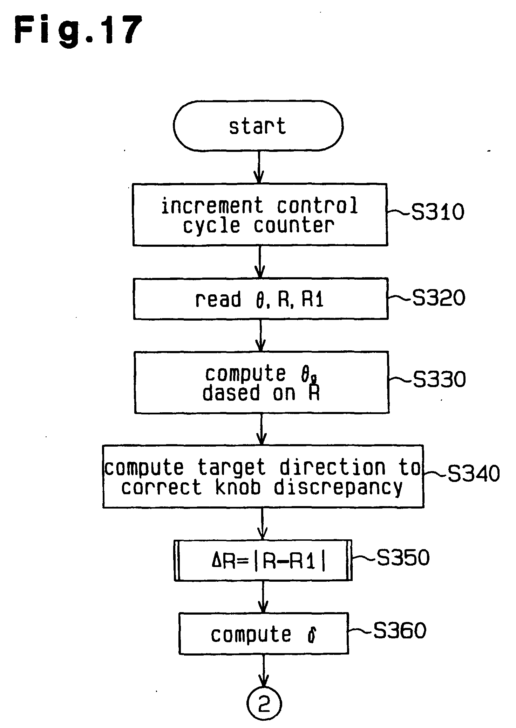

The CPU 51 executes various computations based on programs stored in the ROM 52 and stores the results of the computations in the RAM 53. The ROM 52 stores a knob position correction program shown in the flowcharts of Figs. 17 to 19. In these flowcharts, step S330 corresponds to the target position computation means, step S340 corresponds to the target direction detection means, step S350 corresponds to rotation speed detection means, step S390 corresponds to vehicle wheel angle judgment means, steps S400 and S460 correspond to third correction prohibition means. Step S410 corresponds to straight line judgment means, step S430 corresponds to the discrepancy judgment means, steps S440 and S450 correspond to the first correction execution means and straight range correction execution means. Step S460 corresponds to second correction prohibition means, steps S510 to S590 correspond to the manipulation direction detection means, and steps S610 and S620 correspond to rotation stop judgment means.

As shown in Fig. 10, the detection signals SS1, SS2, SSC from the first transistor 41, the second transistor 42 and a correction transistor 43 are sent to the CPU 51 and the edge detector 47. The edge detector 47 detects rising edges and falling edges of the signals SS1, SS2 and SSC. Upon detection of the edges, the edge detector 47 outputs edge signals SE1, SE2, SEC. Therefore, the CPU 51 alternately receives the edge signals SE1, SE2 every time the steering wheel 2 is rotated one one-hundred-sixtieth of a turn ($2.25°$).

The steering counter 54 counts the steering wheel angle θ. Every time the CPU 51 receives either one of the edge signals SE1, SE2, that is, every time the steering wheel 2 is rotated one one-hundred-sixtieth of a turn, the CPU 51 increments or decrements the counter value C of the steering counter 54 by one. The position of the knob 2a (steering wheel angle θ) is represented by a relative angle of the steering wheel 2. In the counter 54, the steering wheel angle θ is expressed by the value of the counter value C, which is a number between zero and one hundred fifty nine. The counter 54 sets the counter value C to eighty when the knob 2a is at the neutral position. Every time the edge detector 57 receives the edge signal SEC, the CPU 51 corrects the count value C such that the neutral position of the knob 2a corresponds to a counter value C of eighty.

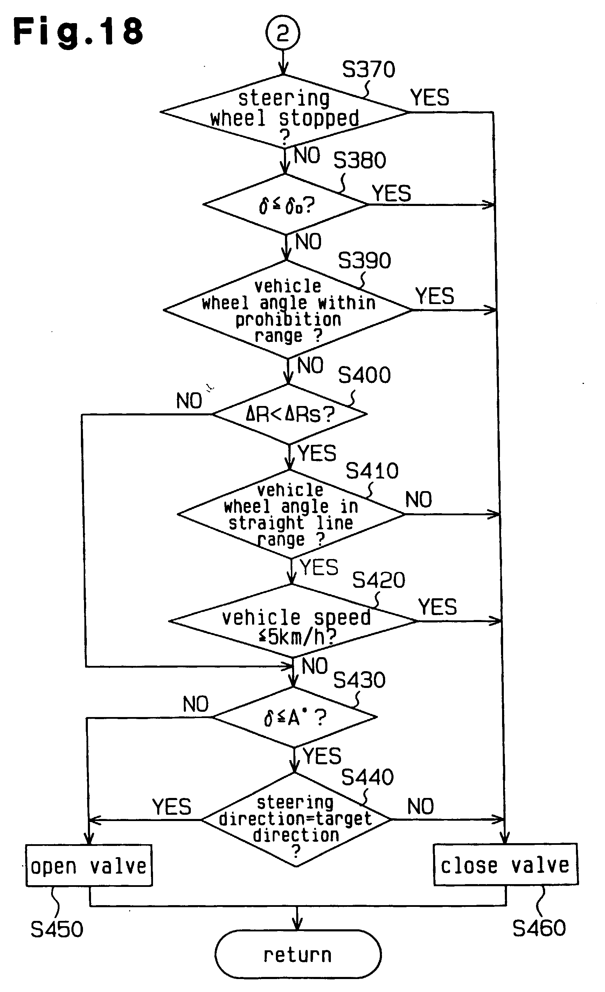

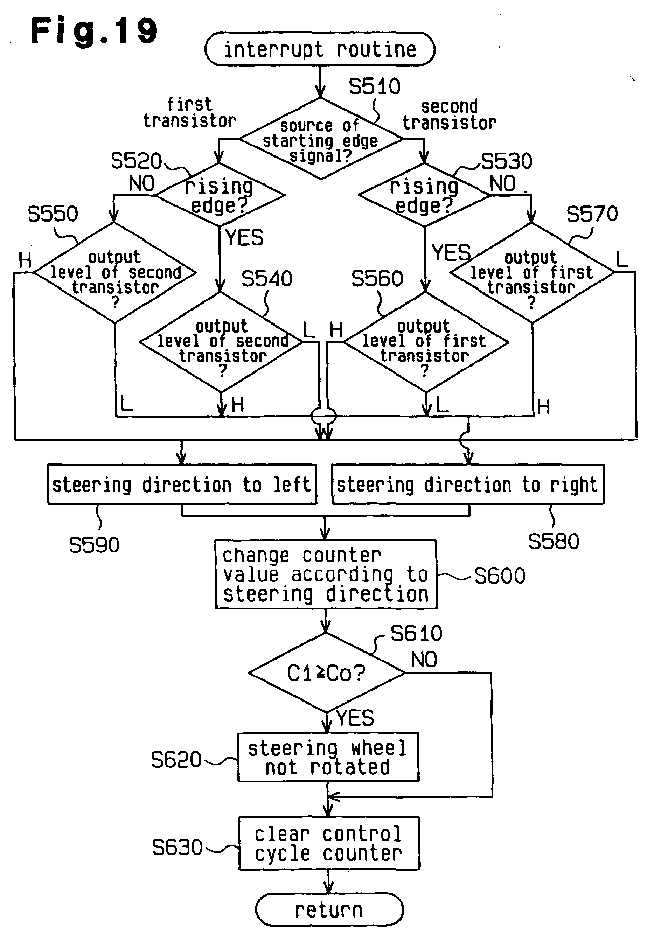

The CPU 51 executes the knob position correction procedure shown in Figs. 17 and 18 at predetermined time intervals $t_o$ (for example, ten milliseconds) based on clock signals from the clock circuit 56. However, when receiving either one of the edge signals SE1 and SE2, the CPU 51 assigns priority to the interrupt routine shown in Fig. 19 and executes the routine of Fig. 19. Similarly, when receiving the edge signal SEC, the CPU 51 performs the correction of the counter value C of the steering counter 54.

The control cycle counter 55 counts the number of corrections of the knob position. Every time the counter value C in the steering counter 54 is changed, that is, every time the steering wheel 2 is rotated one one-hundred-sixtieth of a turn, the control cycle counter 55 is cleared. The counter value C1 of the control cycle counter 55 is used for judging whether the steering wheel 2 is being rotated or not.

The interrupt routine of Fig. 19 is executed for judging the rotation direction (hereinafter referred to as steering direction) of the steering wheel 2. This routine also performs counting of the steering counter 54, clearing of the control cycle counter 55 and detection of stopping of the steering wheel rotation. The steering direction of the steering wheel 2 is judged by using the signals SS1, SS2, SE1, SE2. That is, the CPU 51 sees the type of the edge (rising edge or falling edge) of the received edge signal (SE1 or SE2) and the level of a detection signal (SS1 or SS2) that is not the source of the received edge signal (SE1 or SE2). As shown in Fig. 12, when the signal SS1 is a rising edge and the signal SS2 is H level, the CPU 51 judges that the steering wheel 2 is being rotated to the right. When the signal SS1 is a rising edge and the signal SS2 is L level, the CPU 51 judges that the steering wheel 2 is being rotated to the left. If the signal SS1 is a falling edge, the relationship between the output level of the signal SS2 and the rotation direction is inverted. When the signal SS2 is a rising edge and the signal SS1 is L level, the CPU 51 judges that the steering direction is to the right. When the signal SS2 is a rising edge and the signal SS1 is H level, the CPU 51 judges that the steering direction is to the left. If the signal SS2 is a falling edge, the relationship between the output level of the signal SS1 and the steering direction is inverted.

The wheel angle signal R from the potentiometer 28 is converted int an 8-bit AD value (0-255) by the converter 48 and is then sent to the CPU 51. The CPU 51 stores this AD value as the vehicle wheel angle R. An AD value of one hundred twenty eight corresponds to the $0°$ position of the vehicle wheels 19. When the AD value is less than one hundred twenty eight (AD value<128), that is, when the value of the angle R is negative, the vehicle wheels 19 are steered such that the forklift F turns to the left. When the AD value is greater than one hundred twenty eight (AD value>128), that is, when the angle R is positive, the vehicle wheels 19 are steered to turn the forklift F to the right.

The vehicle speed signal v from the vehicle speed sensor 45 is sent to the CPU 51 via the converter 49. The signal v is a pulse signal, the frequency of which is proportional to the vehicle speed. The CPU 51 computes the number of pulses per unit time to obtain an 8-bit AD value (0-255), which corresponds to the vehicle speed. The CPU 51 commands the exciter 50, which is connected to the output interface 58, to output a control signal to the solenoid 25 for exciting or de-exciting the solenoid 25.

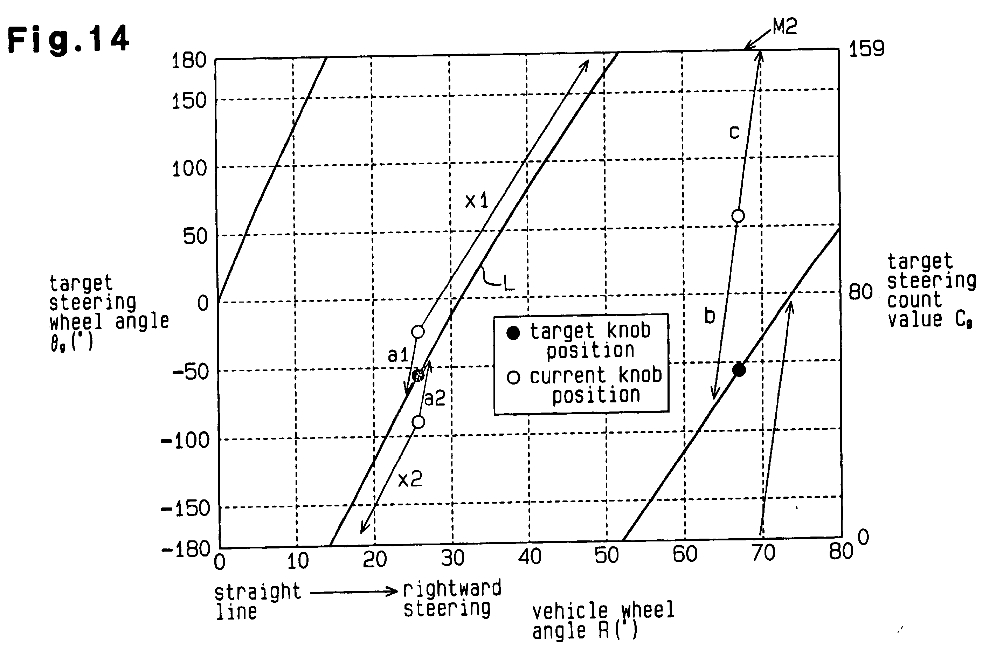

The ROM 52 stores a map M2 of Figs. 13 and 14. The graph of Fig. 14 shows a part of Fig. 13 that corresponds to rightward vehicle wheel angles R. The map M2 shows the target steering wheel angle θg in relation to the vehicle wheel angle R of the vehicle wheels 19. The target angle θg is used when correcting the position of the knob 2a. The map M2 includes control target lines L, which represents the relationship between the vehicle wheel angle R and the target. The locations of the lines L are determined on the assumption that the orbitrol efficiency is 100%. In this embodiment, the steering wheel angle $\theta$ is set to 0° when the knob 2a is at the neutral position. The target angle $\theta g$ (-180° to 180°) corresponds to value from zero to one hundred fifty nine of the target steering counter value Cg.

In the knob position correction, the CPU 51 computes the angle discrepancy $\delta$ between the angle $\theta$ of the steering wheel 2 and the target angle $\theta g$, which is obtained based on the vehicle wheel angle R of the vehicle wheels 19. The CPU 51 executes the knob position correction procedure to decrease the angle discrepancy $\delta$ to below an acceptable value $\delta o$ (for example, about 5°). The angle discrepancy $\delta$ refers to the shortest angular distance between the actual knob position and the target knob position. If the actual angle difference $\Delta\theta s$ exceeds 180°, the angle discrepancy $\delta$ is obtained by subtracting the difference $\Delta\theta s$ from 360°($\delta = 360° - \Delta\theta s$). The angle discrepancy $\delta$ is computed based on the steering wheel angle $\theta$ and the target steering wheel angle $\theta g$.

The conditions under which the knob position correction is executed are changed according to whether the angle discrepancy $\delta$ is greater than a predetermined angle A°. When the angle discrepancy $\delta$ is smaller than A°($\Delta\theta s \leqq A°$ or $\Delta\theta s \geqq (360-A)°$), the knob position is corrected only when the steering direction of the steering wheel 2 matches a direction (target direction) in which the actual knob position approaches the target knob position by the smallest rotation. When the angle discrepancy $\delta$ exceeds the angle A° ($A° < \Delta\theta s < (360- A)°$), the knob position is corrected regardless of the rotation direction of the steering wheel 2.

The range of the predetermined angle A° is the same as that of the previous embodiment. Racing the steering wheel 2 by a great amount during a knob position correction raises a possibility that the angle discrepancy will become greater after the correction. The use of the predetermined angle A° lowers this possibility. That is, when the angle discrepancy is greater than the angle A° and the steering wheel 2 is rotated in a direction opposite to the target direction, the correction is more likely to reduce the angle discrepancy than to increase the discrepancy.

Limit angles RK, LK are set within the stroke limits RE, LE of the steering cylinder 12. The angle between the limit angle RK, LK and the stroke ends RE, LK is about 10% of the rotation range of the steering wheel 2. When the absolute value |R| of the vehicle wheel angle R is equal to or greater than a predetermined value, correction of the knob position is prohibited. Specifically, when an equation $RK \leqq R \leqq RE$ or $LE \leqq R \leqq LK$ is satisfied, that is, when the steered angle R is in a correction prohibition range, the knob position correction is prohibited.

The CPU 51 compares the current wheel angle R and the vehicle wheel angle R1 detected earlier by a certain time. The CPU 51 computes the rotation speed VH of the steering wheel 102 based on the change $\Delta R$ of the values R and R1. The steering wheel rotation speed VH is judged to be slow when below a value VHL (for example, 0.3 rps). The value VHL corresponds to a threshold value $\Delta Rs$ of the vehicle wheel angle change $\Delta R$. When the vehicle wheel angle change $\Delta R$ is smaller than the threshold value $\Delta Rs$, knob correction is basically prohibited. However, when the vehicle speed is over 5km/h and the vehicle wheel angle R is within a straight range, or when the steering wheel angle is within a range of $\pm 110°$ from the neutral position, knob position correction is not prohibited.

The relationship between the rotation speed of the steering wheel 2 and the pivoting speed of the vehicle wheels 19 changes depending on whether the electromagnetic valve 22 is opened or closed. Therefore, two different threshold values $\Delta Rs$ are used to judge whether the steering wheel rotation speed VH is less than the value VHL. Specifically, a value r1 is used as the threshold value $\Delta Rs$ when knob postion correction is being executed. A value r2 is used as the threshold value $\Delta Rs$ when the correction is not being executed. The value r1 is greater than the value r2 (r1>r2). The values r1, r2 each represent a certain vehicle wheel angle and are computed based on the orbitrol efficiency when the steering wheel rotation speed VH is equal to the value VHL ( VH=VHL ) and based on the ratio of oil returned to the drain tank 8.

The knob position correction executed by the CPU 51 will now be described with reference to the flowcharts of Figs. 17 to 19. The electromagnetic switch valve 22 is initially at the disconnected position.

When the engine of the forklift F is running, the CPU 51 inputs detection signals SS1, SS2, SSC from the transistors 41, 42, 43, the edge signals SE1, SE2, SEC from the edge detector 47, the steering wheel angle $\theta$ signal R from the potentiometer 28 and the vehicle speed signal v from the vehicle speed sensor 45.

The CPU 51 executes the knob position correction procedure shown in Figs. 17 and 18 at predetermined time intervals $t_o$ (for example, ten milliseconds). When the knob 2a is displaced from the normal position by an amount greater than the acceptable value $\delta o$, that is, when the wheel angle R is greater than $\delta o$, the CPU 51 corrects the discrepancy. When receiving the edge signals SE1, SE2, the CPU 51 stops the current routine and starts the interrupt routine shown in Fig. 19. In this routine, the CPU 51 executes several processes for obtaining necessary data for the knob position correction. Specifically, the CPU 51 executes the counting process of the steering counter 54 and the computation for detecting the steering direction of the steering wheel 2. The CPU 51 also judges whether the steering wheel 2 is stopped and clears the control cycle counter 55. In the first step 310 of the knob correction procedure, which is shown in Figs. 17 and 18, the counter value C of the control counter 55 is incremented. In other words, the counter value C1 is incremented by one at every

predetermined time interval $t_o$.

First, the interrupt routine of Fig. 19 will be described. When receiving either one of the edge signals SE1 and SE2, the CPU 51 assigns priority to the interrupt routine shown in Fig. 19 and executes the routine of Fig. 19.

At 510, the CPU 51 judges which detection signal is the source of the starting edge signal. In other words the CPU 51 judges which of the transistors 41, 42 is the source of the starting edge signal. If the first transistor 41 is the source of the starting edge signal, the CPU 51 moves to step 520. If the second transistor 42 is the source of the starting edge signal, the CPU 51 moves to step 530. At step 520, the CPU 51 judges whether the detected signal represents a rising edge or a falling edge by referring to an edge flag. If the output level of the detected edge signal in the previous routine was H, the edge flag is set to zero in the current routine. In this case, the edge signal in the current routine is a falling edge. If the output level of the detected edge signal in the previous routine was L, the edge flag is set to one in the current routine. In this case, the edge signal in the current routine is a rising edge. The CPU 51 monitors the edge flag corresponding to the source of the edge signal detected in the current routine. If the edge flag is zero, the CPU 51 judges that the current edge is a falling edge. If the edge flag is one, the CPU 51 judges that the current edge is a rising edge. If the signal has a rising edge, the CPU 51 moves to step 540. If the signal has a falling edge, the CPU 51 moves to step 550.

At steps 540 and 550, the CPU 51 judges the output level of the second transistor 42. When the edge of the signal SS1 of the first transistor 41 is a rising edge as shown in Fig. 12, the CPU 51 judges that the steering wheel 2 is being rotated to the right at step 540 if the signal SS2 of the second transistor 42 has an H level. As shown in Fig. 12, for example, when the signal SS1 is a rising edge and the signal SS2 is H level, the CPU 51 judges that the steering direction of the steering wheel 2 is to the right at step 580. If the signal SS2 of the second transistor 42 has an L level at step 540, the CPU 51 judges that the steering direction of the steering wheel 2 is to the left at step 590. When the signal SS1 of the first transistor 41 has a rising edge and the signal SS2 of the second transistor 42 has an L level at step 550, the CPU 51 judges that the steering direction of the steering wheel 2 to the right at step 580. If the signal SS2 of the second transistor 42 has an H level at step 550, the CPU 51 judges that the steering wheel is being rotated to the left at step 590.

If the second transistor 42 is the source of the starting edge signal at step 510, the CPU 51 executes step 530, steps 560 or 570 and steps 580 or 590. In other words, the CPU 51 judges the steering direction of the steering wheel 2 based on the relationship between the type of the edge signal from the second transistor 42 and the output level of the first transistor 41, which is not the source of the edge. The detected steering direction is represented by the value of the steering direction flag. The flag is set to zero when the steering direction is to the left and is set to one when the steering direction is the right.

At step 600, the CPU 51 changes the counter value C in the steering counter 54 in accordance with the detected steering direction. Specifically, the CPU 51 increments the value C when the steering direction is to the right and decrements the value C when the steering direction is to the left. When incrementing, if the value C is one hundred fifty-nine, the CPU 51 changes the value C to zero. When decrementing, if the value C is zero, the CPU 51 changes the value C to one hundred fifty-nine. In this manner, the counter value C in the steering counter 54 is changed to correspond to the steering wheel angle $\theta$, which is represented by the relative angle of the steering wheel 2.

At step 610, the CPU 51 judges whether or not the counter value C1 of the control cycle counter 55 is equal to or greater than the value Co. The counter value C1 is cleared every time the interrupt routine is executed, that is, every time the steering wheel 2 is rotated one one-hundred-sixtieth of a turn (2. 25 degrees). Also, the counter value C1 is incremented at every cycle $t_o$ (for example, ten milliseconds). Therefore, the counter value C1 indicates the time period during which the steering wheel 2 is rotated one one-hundred-sixtieth of a turn. If the counter value C1 is greater than the value Co, the CPU 51 judges that the steering wheel 2 is not rotating.

If the counter value C1 is equal to or greater than the value Co, the CPU 51 determines that the steering wheel 2 is not being rotated and sets a flag for indicating that the wheel 2 is not rotating to one at step 620. Then, the CPU 51 moves to step 630. Also, if the counter value C1 is less than the value Co, the CPU 51 moves to step 630. At step 630, the counter 55 is cleared.

As described above, during the knob position correction, the actual angle $\theta$ of the steering wheel 2 is detected based on the counter value C of the steering counter 54. The steering direction of the steering wheel 2 is detected based on the steering direction flag. Further, whether the steering wheel is rotating is detected by referring to the rotation stop flag.

The knob position correction will now be described with reference to Figs. 17 and 18. At step 310, the CPU 51 increments the control cycle counter 55. At step 320, the CPU 51 reads the angle $\theta$ of the steering wheel 2 and the steering wheel angle $\theta$s R, R1. The wheel angle R1 represents the angle of the wheels 19 a time that is earlier by a time period $n \cdot t_o$ and was stored in the predetermined area in the RAM 53. The current wheel angle R is stored in the predetermined area of the RAM 53. The stored current wheel angle R will be used as the angle R1 at a time that is later by a time period $n \cdot t_o$.

At step 330, the CPU 51 computes the target angle θg of the steering wheel 2 using the map M2 of Figs. 13 and 14 based on the vehicle wheel angle R. The target angle θg is expressed by the target steering counter value Cg, which corresponds to a count value C of the steering counter 54.

At step 340, the CPU 51 computes the target direction of the knob position correction to correct the knob position. That is, the CPU 51 judges whether leftward rotation or rightward rotation of the steering wheel 2 requires less rotation for moving the actual knob position to the target knob position. The CPU 51 computes the difference $\Delta C$ between the current counter value C of the steering counter 54 and the target steering counter value Cg ($\Delta C = |C-Cg|$). When the difference $\Delta C$ is equal to or less than eighty ($|\theta-\theta g| \leqq 180°$), the CPU 51 sets the target direction to the right if C is smaller than Cg (C<Cg) and sets the target direction to the left if C is greater than Cg (C>Cg). When the difference $\Delta C$ is greater than eighty ($|\theta-\theta g| > 180°$), the CPU 51 sets the target direction to the left if C is smaller than Cg (C<Cg) and sets the target direction to the right if C is greater than Cg (C>Cg). The computed target direction is stored as the value of the target direction flag. That is, the flag is set to zero when the target direction is leftward and to one when the target direction is rightward.

At step 350, the CPU 51 computes the change $\Delta R$ between the earlier wheel angle R1 and the current wheel angle R ($\Delta R = |R-R1|$) and moves to step 360. At step 360, the CPU 51 computes the angle discrepancy $\delta$ between the actual position of the knob 2a and the target position of the knob 2a. If the difference $\Delta \theta$ between $\theta$ and $\theta g$ is equal to or less than 180°, the angle discrepancy $\delta$ is set to the angle difference $\Delta \theta$. If the difference between $\Delta \theta$ is greater than 180°, the angle discrepancy $\delta$ is computed by an equation ($\delta \Delta \theta = 360° - \Delta \theta$) Accordingly, the shortest angle discrepancy $\delta$ between the current knob position and the target knob position is obtained. The computed angle discrepancy $\delta$ is represented as a counter value, which is computed by the counter values C and Cg. At step 370, the CPU 51 reads the value of the rotation stop flag for judging whether the steering wheel 2 is stopped. If the flag is set to one, the CPU 51 judges that the steering wheel 2 is not rotating and moves to step 460. At step 460, the CPU 51 closes the switch valve 22. Therefore, when the steering wheel 2 is not rotating, the knob position correction procedure is not executed.

If the steering wheel 2 is being rotated at step 370, the CPU 141 moves to step 380. At step 380, the CPU 51 judges whether the angle discrepancy $\delta$ is equal to or less than the acceptable value $\delta o$. If the angle discrepancy $\delta$ is equal to or less than the acceptable value $\delta o$, the CPU 51 moves to step 4600 and closes the switch valve 22. Therefore, when the angle discrepancy $\delta$ is equal to or less than the acceptable value $\delta o$, knob position correction is not executed. On the other hand, if the angle discrepancy $\delta$ is greater than the acceptable value $\delta o$, the CPU 51 moves to step 390.

At step 390, the CPU 51 judges whether the vehicle wheel angle R is in the correction prohibition range. That is, the CPU 51 judges whether equation LE≦R≦LK or RK≦R≦RE is satisfied. When the vehicle wheel angle R is equal to or smaller than the limit angle LK or when the vehicle wheel angle R is equal to or greater than the limit angle RK, that is, when the vehicle wheel angle R is in the correction prohibition region, the vehicle wheel angle R is close to the rightmost or leftmost position. At this time, the CPU 51 moves to step 460 and closes the valve 22. The knob position is not corrected when the vehicle wheels 19 are at the rightmost position or at the leftmost position. Thus, when the steering wheel 2 is rotated to an endmost position, the steering wheel 2 cannot race even if the position of the knob 2a is out of position. As a result, the operator can judge that the vehicle wheels 19 are at an endmost position by the resistance transmitted from the steering wheel 2. On the other hand, if the vehicle wheel angle R is not in the correction prohibition region, the CPU 51 moves to step 400.

At step 400, the CPU 51 judges whether the change $\Delta R$ of the steering wheel angle $\theta$ is smaller than a threshold value $\Delta Rs$. When the exciter 50 outputs a de-exciting signal, the valve flag is set to zero. When the exciter 50 outputs an exciting signal, the valve flag is set to one. When the valve flag is zero, the CPU 51 substitutes the value r1 for the threshold value $\Delta Rs$. The value r1 is used when the knob position correction is not being executed. The CPU 51 judges whether the vehicle wheel angle change $\Delta R$ is smaller than the value r1. When the valve flag is one, the CPU 51 substitutes the value r2 for the threshold value $\Delta Rs$. The value r2 is used when the knob position correction is being executed. The CPU 51 judges whether the vehicle wheel angle change $\Delta R$ is smaller than the value r2. If the vehicle wheel angle change $\Delta R$ is equal to or greater than the threshold value $\Delta Rs$, the CPU 51 moves to step 430. If the vehicle wheel angle change $\Delta R$ is smaller than the threshold value $\Delta Rs$, the CPU 51 moves to step 410.

At step 410, the CPU 51 judges whether the vehicle wheel angle R is within the straight range. When the CPU 51 judges that the vehicle wheel angle R is not in the straight range, for example, when the CPU 51 judges that the vehicle wheel angle R is within a range from -110° to +110°(-110°≦ $\theta$≦110°), the CPU 51 moves to step 460. At step 460, the CPU 51 closes the valve 50. If the vehicle wheel angle R is in the straight range, the CPU 51 moves to step 420.

At step 420, the CPU 51 judges whether the vehicle speed is equal to or less than 5km/h. Specifically, the vehicle speed signal v from the vehicle speed sensor 45 is digitally converted to a pulse signal. The CPU 51 computes the vehicle speed based on the frequency of the pulse signal and judges whether the vehicle speed is equal to or less than 5km/h. If the vehicle speed is greater than 5km/h, the CPU 51 moves to step 430. If the vehicle speed is less than 5km/h, the CPU 460 moves to step 460 and closes the valve 50.

In this manner, when the vehicle wheel angle change ΔR is less than the threshold value ΔRs, the knob position correction is stopped as a rule with a few exceptions. That is, the knob position is corrected only when the vehicle speed is greater than 5km/h and the vehicle wheel angle R is in the straight range. When the orbitrol efficiency is lowered by slow rotation of the steering wheel 2, the electromagnetic valve 22 is not opened, which prevents the operator from being disturbed by manipulation of the steering wheel 2. That is, when the steering wheel 2 is rotated, the wheels 19 respond and are steered.

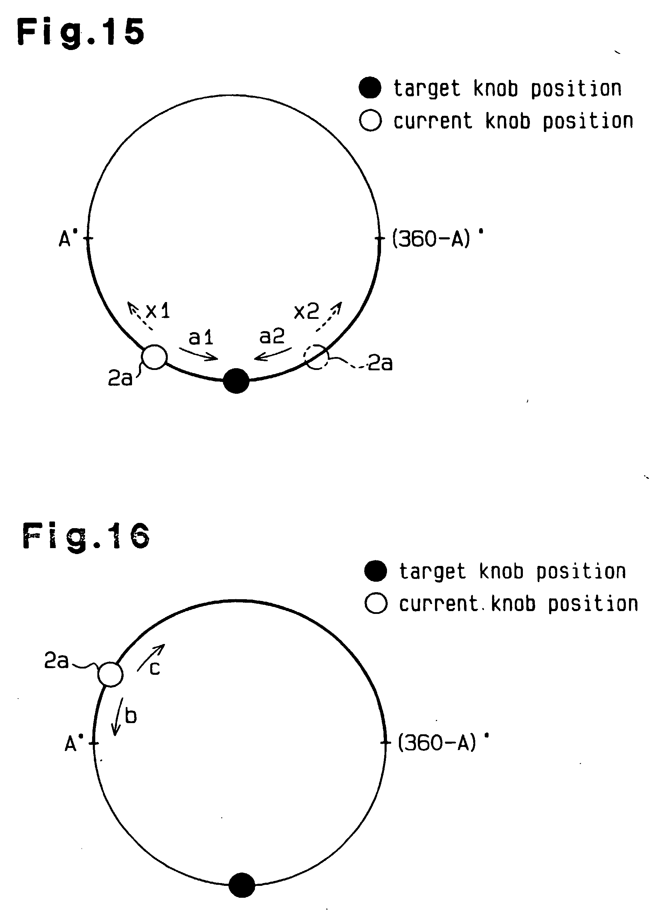

At step 430, the CPU 51 judges whether the angle discrepancy δ is equal to or smaller than the reference angle A°. If the angle discrepancy δ is greater than the angle A°, the CPU 51 moves to step 450 and excites the solenoid 25 to open the switch valve 22. Thus, if the angle discrepancy δ is greater than the angle A°, as illustrated in Fig. 16, knob position correction is executed if the steering direction of the steering wheel 2 is to the left (in a direction b) or to the right (in a direction c). The knob 2a therefore approaches the target position from the current position in the direction b or in the direction c.

If the steering wheel 2 is rotated in the direction c, the angle discrepancy δ is corrected by the greater amount of rotation. However, the angle discrepancy δ is greater than the angle A° and is relatively large. Therefore, in many cases, the knob position correction will decrease the angle discrepancy δ, rather than increase it. As a result, knob position correction is executed more frequently and an angle discrepancies greater than the angle A° are not left uncorrected.

On the other hand, when the angle discrepancy δ is equal to or smaller than the angle A°(δ≦A°), the CPU 51 moves to step 440 and judges whether the actual steering direction of the steering wheel 2 matches the target direction. Specifically, the CPU 51 judges whether the value of the steering direction flag matches the value of the target direction flag. If the steering direction matches the target direction, the CPU 141 moves to step 460 and opens the valve 22. If the rotating direction is different from the target direction, the CPU 51 moves to step 460 and closes the valve 22. If the knob 2a is located at a position shown by a solid line in Fig. 15 and is being moved in a direction a1 (to the left), the knob 2a is approaching the target position in the direction of the smallest rotation amount. In this case, the knob position correction is executed. On the other hand, when the knob 2a is being moved in a direction x1 (to the right), that is, when the knob 2a is approaching the target position in the direction of greater rotation amount, knob position correction is not executed.

Also, when the knob 2a is located at a position illustrated by the broken line in Fig. 15, the position of the knob 2a is displaced from the target position by an amount greater than (360-A)°. In this case, knob position correction is executed if the steering wheel 2 is being rotated in a direction a2, that is, if the knob 2a is approaching the target position in the direction of the smallest rotation amount. If the steering wheel 2 is rotated in a direction x2, that is, if the knob 2a is moving away from the target position, knob position correction is not executed.

If the actual discrepancy is greater than 360°, the relative angle of the steering wheel 2 is used in the knob position correction. In other words, the apparent discrepancy between the actual position of the knob 2a and the target position is used in the correction. Thus, the correction amount is always less than 360°. For example, when the position of the knob 2a is displaced from the target position by one or two turns of the steering wheel 2, if the apparent position of the knob 2a matches the target position, the knob correction procedure is not executed.

In addition to the advantages of the first embodiment, the second embodiment has the following advantages.

(1) The steering wheel angle θ is detected by the rotary encoder 38. Therefore, the counter value C, which corresponds to the position of the knob 2a, is detected along the entire rotation range (360°) of the steering wheel 2. Therefore, the position of the knob 2a can be corrected regardless of the rotation position of the steering wheel 2. In the first embodiment, the potentiometer 27 always has an undetectable range, which sometimes causes the knob position correction to be suspended. In the second embodiment, the knob position correction is not suspended. This reduces racing of the steering wheel 2 during the correction procedure thereby reducing the time required for the correction. When the vehicle wheels 19 are put back to the straight position, the knob 2a is reliably returned to the neutral position.

(2) When the angle discrepancy δ is smaller than the angle A°, the knob position correction is executed only if the steering wheel 2 is being rotated in the direction of the smaller rotation amount approaching the target position. Therefore, although the discrepancy is corrected using the relative angle of the steering wheel 2, the discrepancy is positively reduced. For example, even if the actual discrepancy is 280°, the correction amount is 75° if the acceptable value θo is 5°. In this manner, when the actual discrepancy is less than 360°, the racing amount of the steering wheel 2 for correcting the position of the knob 2a is smaller than the actual discrepancy. As a result, unnecessary racing of the steering wheel 2 is further reduced.

(3) The steering direction of the steering wheel 2 is detected by the rotary encoder 38. That is, the CPU 51 judges the steering direction of the steering wheel 2 based on the detection signal from the rotary encoder 38. Therefore, there is no need for another device for detecting the steering direction of the steering wheel 2.

(4) The number of times that knob position correction takes place while the steering wheel 2 is rotated for the predetermined angle (2.25°) is counted by the control cycle counter 55. The count value C1 is used for judging whether the steering wheel 2 is stopped. In other words, whether the steering wheel 2 is stopped is detected based on the detection signal of the rotary encoder 38.

(5) The sensor 40 has the two phototransistors 41, 42, which are arranged such that the phases of signals SS1 and SS2 from the each photodetector are offset by 90 degrees. This reduces the size of the rotary encoder 38 and allows the steering wheel angle θ to be detected with a relatively high resolution.

(6) The count value C of the steering counter 54 is corrected based on signals from the correction transistor 43, which allows the detection value of the steering wheel angle θ to be corrected every time the knob 2a passes by the neutral position.

(7) The steering wheel 2 can be rotated by more than two turns either to the right or to the left from the neutral position. The disk 39 of the rotary encoder 38 is coupled to and rotates integrally with the steering shaft 3, which allows the steering wheel angle θ to be accurately detected.

(8) When the vehicle wheels 19 are in the vicinity of an endmost position, that is, when the vehicle wheel angle R is in the correction prohibition range, knob position correction is prohibited. This permits the operator to sense that the wheels 19 are at the leftmost position LE or at the rightmost position RE through the resistance transmitted from the steering wheel 2.

(9) When the vehicle F is traveling straight, the operator manipulates the steering wheel 2 for fine-tuning of the vehicle wheel angle R. When the vehicle wheel angle R is in the straight range, knob position correction is not prohibited if the change ΔR of the vehicle wheel angle R is smaller than the threshold value ΔRs. Therefore, the position of the knob 2a is not gradually displaced by the fine-tuning of the vehicle wheel angle R.

(10) The reactive force of the tires is increased when the vehicle speed is low and when the vehicle is not moving. Thus, opening the valve 22 when the vehicle speed is low or when the vehicle is not moving may disturb the operator. However, in this embodiment, when the vehicle speed is lower than 5km/h and the change ΔR of the vehicle wheel angle R is smaller than the threshold value ΔRs, knob position correction is prohibited even if the vehicle wheel angle R is in the straight range. Therefore, the operator is not disturbed.

(THIRD EMBODIMENT)

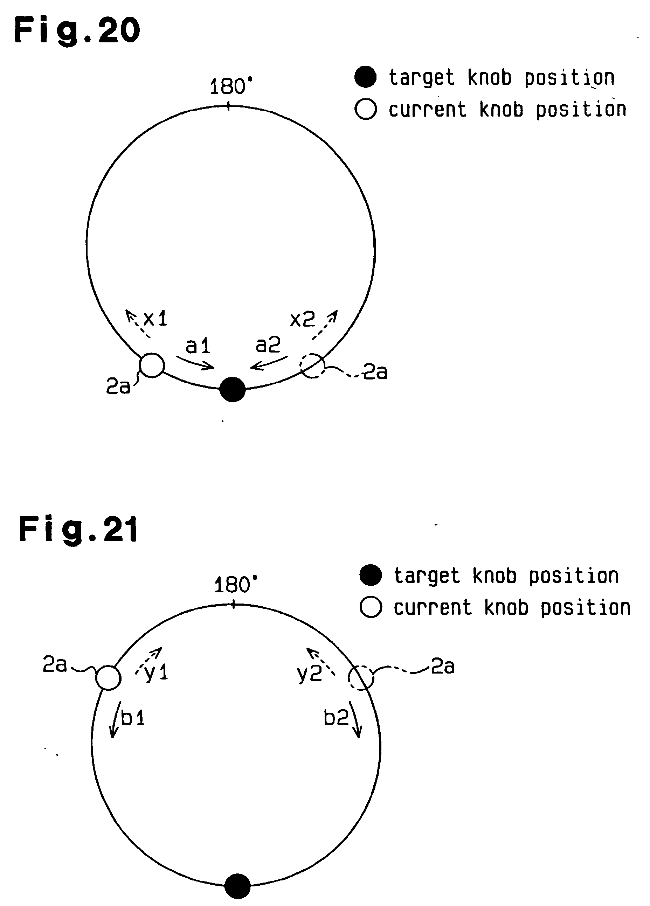

A third embodiment of the present invention will now be described with reference to Figs. 20 to 24. The third embodiment is a modification of the second embodiment. In the third embodiment, when the discrepancy δ is greater than the predetermined angle A°, the knob position is corrected if the knob 2a is approaching the target position in the direction of the smaller rotation amount.

The third embodiment is the same as second embodiment except for part of the knob position correction program data. The differences from the second embodiment will mainly be discussed below.

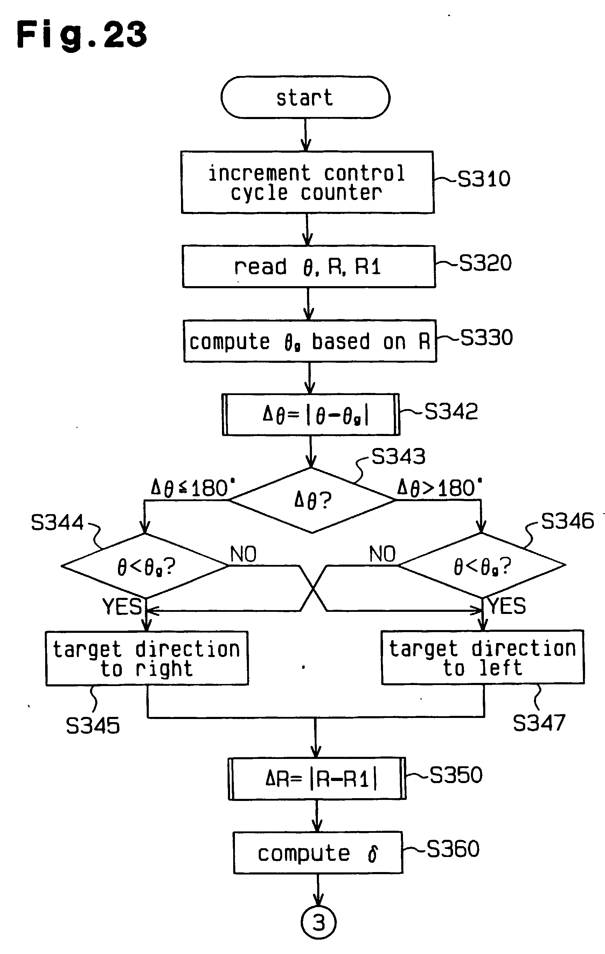

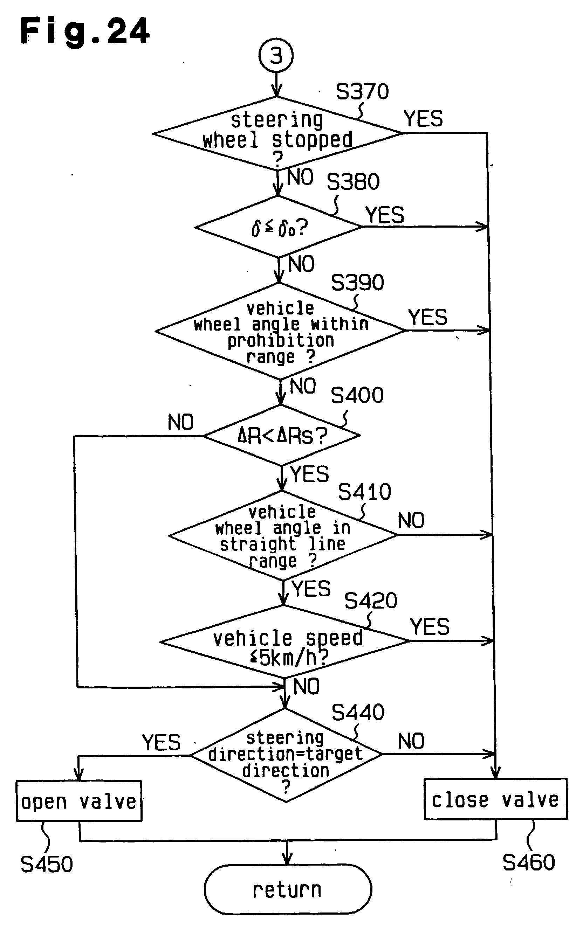

The ROM 52 stores program data of a knob position correction shown in Figs. 23 and 24. The same interrupt routine as that shown in Fig. 19 is used in this embodiment.

In this embodiment, knob position correction is executed only when the if the knob 2a is approaching the target position in the direction of the smaller rotation amount. Thus, the third embodiment is the same as the second embodiment when the predetermined angle A° is 180°. That is, the electromagnetic valve 22 is opened when the knob 2a approaches the target knob position from within a range of 180°.

The flowchart of Fig. 23 is substantially the same as the flowchart of Fig. 17 according to the second embodiment. Steps 342 to 347 in the flowchart of Fig. 23 are substantially the same as step 340 of the second embodiment. The detailed procedure of step 340 is described in steps 342 to 347.

In the flowchart of Fig. 24, whether the knob position correction is executed does not have to be determined based whether the angle discrepancy δ is equal to or less than the predetermined value A°. Thus, step 430 of the second embodiment is omitted from the flowchart of Fig. 24. In the second embodiment, the rotation speed of the steering wheel 2 is indirectly detected based on the change ΔR of the vehicle wheel angle using the threshold value ΔRs. Two values r1 and r2 are used depending whether the CPU 51 is opening or closing the valve 22. However, in the third embodiment, only the value r2, which is used when the CPU 51 is opening the valve 22, is used as the threshold value ΔRs. The flowchart of Fig. 24 is the same as the flowchart of Fig. 18 except that step 430 is omitted and that the threshold value ΔRs is the value r2.

Knob position correction according to the third embodiment will now be described.

When the engine of the forklift F is running, the CPU 51 executes the knob position correction procedure shown in Figs. 23 and 24, for example, every ten milliseconds. The control cycle counter 55 counts the count value C1. The count value C1 corresponds to the elapsed time until the steering wheel 2 is rotated one one-hundred-sixtieth of a turn, or until the count value in the steering counter 54 is changed to one. The CPU 51 executes the interrupt routine of Fig. 19 every time the steering wheel 2 is rotated one one-hundred-sixtieth of a turn, or every time the CPU 51 receives either of the edge signals SE1, SE2. The interrupt routine changes the count value of the steering counter 54 to one (S600) thereby determining the steering direction of the steering wheel 2 (S510 to S590). Also, if counter value C1 of the control cycle counter 55 is less than the referential value Co, the steering wheel 2 is judged to be not rotating. In this case, the CPU 51 judges that the steering wheel 2 is stopped (S610, S620).

The CPU 51 executes the knob position correction procedure of Figs. 23 and 24 every ten milliseconds. The CPU 51 reads the steering wheel angel $\theta$ and the vehicle wheel angles R and R1 (S320). The CPU 51 then computes the target steering wheel angle $\theta g$ based on the vehicle wheel angle R (S330).

Next, the CPU 51 computes the target direction for correcting the knob position discrepancy in the following manner. First at step 342, the CPU 51 computes the difference $\Delta\theta$ by an equation $\Delta\theta=|\theta-\theta g|$. The CPU 51 then judges whether the difference $\Delta\theta$ is greater than 180°. If the $\Delta\theta$ is equal to or less than 180°, the CPU 51 moves to step 344. At step 344 the steering wheel angle $\theta$ is compared with the target steering wheel angle $\theta g$. If the steering wheel angle $\theta$ is smaller than the target angle $\theta g$ ($\theta<\theta g$), the CPU 51 moves to step 345 and sets the target direction to the right. If the angle $\theta$ is not smaller than the target angle $\theta g$, the CPU 51 moves to step 347 and sets the target direction to the left. If the difference $\Delta\theta$ is greater than 180° at step 343, the CPU 51 moves to step 346. At step 346, the CPU 51 compares the steering wheel angle $\theta$ with the target steering wheel angle $\theta g$. If the angle $\theta$ is smaller than the target angle $\theta g$ ($\theta<\theta g$), the CPU 51 moves to step 347. At step 347, the CPU 51 sets the target direction to the left. If the angle $\theta$ is not smaller than the target angle $\theta g$, the CPU 51 moves to step 345. At step 345, the CPU 51 sets the target direction to the right. In this manner, the target direction is determined such that the knob 2a approaches the target position in the direction of the smaller rotation amount.

At step 350, the CPU 51 computes the change $\Delta R$ based on the current wheel angle R and the previous wheel angle R1 ($\Delta R=|R-R1|$). The CPU 51 indirectly detects the rotation speed of the steering wheel 2 based on the computed change $\Delta R$ of the steering wheel angle $\theta$.

At step 360, the CPU 51 computes the discrepancy $\delta$. The discrepancy $\delta$ is computed based on the difference $\Delta\theta$. When the difference $\Delta\theta$ is equal to or less than 180° ($\Delta\theta\leqq 180°$), the discrepancy $\delta$ is set equal to the difference $\Delta\theta$ ($\delta=\Delta\theta$). When the difference $\Delta\theta$ is greater than 180°, the discrepancy $\delta$ is computed by subtracting the difference $\Delta\theta$ from 360° ($\delta=360°—\Delta\theta$). The discrepancy $\delta$ is the apparent angle difference.

All the data necessary for determining whether to open or close the electromagnetic valve 22 have been obtained. The CPU 51 uses the data to determine whether to open or close the valve 22 at steps 370 to 440. As in the second embodiment, the CPU 51 closes the electromagnetic valve 22 if the steering wheel 2 is stopped, if the discrepancy $\delta$ is equal to or less than the acceptable value $\delta o$, or if the steering wheel angle $\theta$ is in the prohibition range (R<LK or R>RK) in steps 370 to 390. If the vehicle wheel angle change $\Delta R$ is less than the threshold value $\Delta Rs$ and the rotation speed of the steering wheel 2 is low (less than 0.3rps), the CPU 51 closes the electromagnetic valve 22 unless the vehicle speed is higher than 5km/h and the vehicle wheel angle R is in the straight range. If these conditions for closing the valve 22 are not satisfied, the CPU 51 moves to step 440.

The CPU 51 judges whether the steering direction matches the target direction at step 440. If the steering direction matches the target direction, the CPU 51 moves to step 450 and opens the electromagnetic valve 22. If the steering direction does not match the target direction, the CPU 51 moves to step 460 and closes the electromagnetic valve 22.

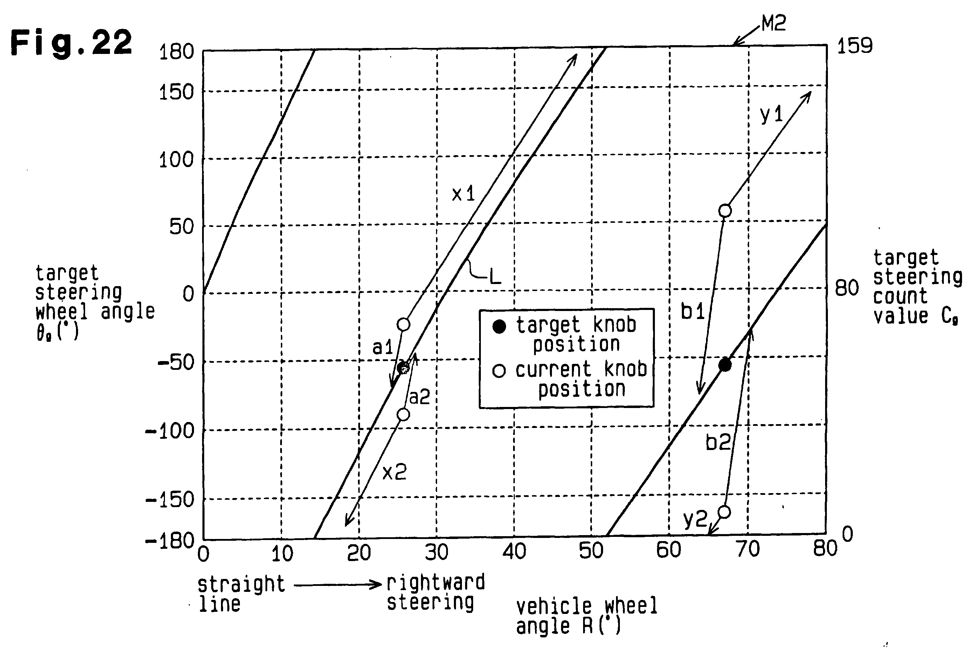

Therefore, when the knob 2a is at a position at which the discrepancy $\delta$ is less than the angle A° as shown in Figs. 20 and 22, the electromagnetic valve 22 is opened when the knob 2a is approaching the target position in the direction of the smaller rotation amount, that is, when the knob 2a is moving in the directions indicated by symbols a1, a2. When the steering wheel 2 is rotated to move the knob 2a in the directions indicated by symbols x1, x2, the electromagnetic valve 22 is closed. When the knob 2a is a position at which the discrepancy $\delta$ is greater than the angle A°, unlike the second embodiment, the electromagnetic valve 22 is opened when the steering wheel 2 is rotated to cause the knob 2a to approach the target knob position, or to be moved in the directions indicated by symbols b1, b2. The valve 22 is closed when the knob 2a is not approaching the target position in the direction of the smaller rotation amount, or is moving in the direction indicated by symbols y1, y2.

In the second embodiment, when the discrepancy $\delta$ is greater than the angle A°, the electromagnetic valve 22 is opened when the steering wheel 2 is rotated in the direction indicated by symbol c of Fig. 16, that is, when the knob 2a approaches the target position in the direction of the greater rotation amount. Therefore, when the steering wheel 2 is rotated by a small amount, the discrepancy δ is enlarged by opening the electromagnetic valve 22. However, in the third embodiment, the electromagnetic valve 22 is not opened when the steering wheel is rotated in the directions y1, y2, that is, when the knob 2a is not approaching the target position in the direction of the smaller rotation amount, even if the discrepancy δ is greater than the angle A°. Thus, unlike the second embodiment, the discrepancy δ is always decreased when the electromagnetic valve 22 is opened.

In the third embodiment, the same value r2 is substituted for the threshold value ΔRs when the valve 22 is opened and when the valve 22 is closed. The valve 22 is open if the vehicle wheel angle change ΔR is equal to or greater than the threshold value ΔRs when the steering wheel 2 is being rotated at a speed equal to or greater than 0.3 rps. In this case, opening of the valve 22 causes the steering wheel 2 to race thereby decreasing the change ΔR of the steering wheel angle θ. As a result, the change ΔR becomes smaller than the threshold value ΔRs (ΔR<ΔRs), which causes the valve 22 to be closed. However, in this case, the valve 22 is intermittently opened, which extends the time required for the knob position correction compared to the second embodiment but corrects the discrepancy δ. This occurs only when the steering wheel 2 is rotated at a speed slightly faster than 0.3rps and therefore causes little problem.

As described above, the knob position correction is executed less frequently when the discrepancy is greater than the angle A°. However, the correction is executed only when the knob 2a approaches the target knob position in the direction of the smaller rotation amount. Therefore, when the steering wheel 2 is rotated by a relatively small amount, a discrepancy is not enlarged by execution of the knob position correction procedure. In other words, when the valve 22 is open, the discrepancy δ is always decreased. Further, the third embodiment has the advantages (1) to (10) of the second embodiment.

(FOURTH EMBODIMENT)

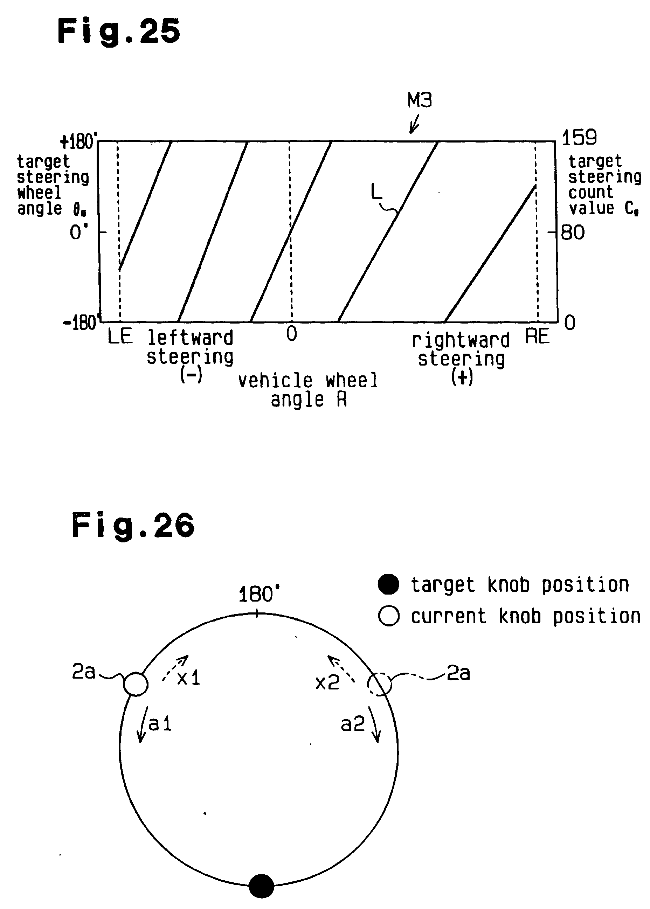

The fourth embodiment will now be described with reference to Figs. 25 to 29. The fourth embodiment is a modification of the third embodiment. The hardware of the fourth embodiment is the same as that of the third embodiment except that a low slip type orbitrol 4 is used. The orbitrol efficiency of the low slip type orbitrol 4 exceeds 100% when the steering wheel 2 is rotated slowly. The software of the fourth embodiment is basically the same as that of the third embodiment except that the map for computing the target steering wheel angle θg based on the vehicle wheel angle R of the vehicle wheels 19 and part of the program data of the knob position correction are different. Like or the same reference numerals are given to those components that are like or the same as the corresponding components of the third embodiment. The difference from the third embodiment will mainly be discussed below.

Since the low slip type orbitrol 4 is used, opening the electromagnetic valve 22 when the steering wheel is slowly rotated does not disturb the operator. Therefore, the valve 22 is permitted to open when the steering wheel is rotated slowly. However, when the vehicle speed is lower than a predetermined value, the valve 22 is not opened if the steering wheel 2 is rotated slowly. When the vehicle speed is lower than the predetermined value, steering the vehicle wheels 19 causes the tires of the wheels 19 to be twisted by a significant amount by friction between the tire and the road surface.

The CPU 51 functions as a control means, means for detecting that the steering wheel is being rotated slowly, means for detecting the pivoting speed of the vehicle wheels and means for detecting the behavior of the vehicle wheels. The potentiometer 28 functions as part of the means for detecting that the steering wheel is being rotated slowly, part of the means for detecting pivoting speed of the vehicle wheels and part of the means for detecting the behavior of the vehicle wheels.

The ROM 52 stores map M3 shown in Fig. 25 instead of the map M2 of Fig. 13. The ROM 52 stores the program data for the knob position correction procedure shown in Figs. 19, 27 and 28. Step 400 in the flowcharts corresponds to the low speed steering detection means. Step 420 corresponds to the vehicle stop detection means. Steps 400 and 420 correspond to first correction prohibition means for prohibiting actuation of the correction means (electromagnetic valve 22).

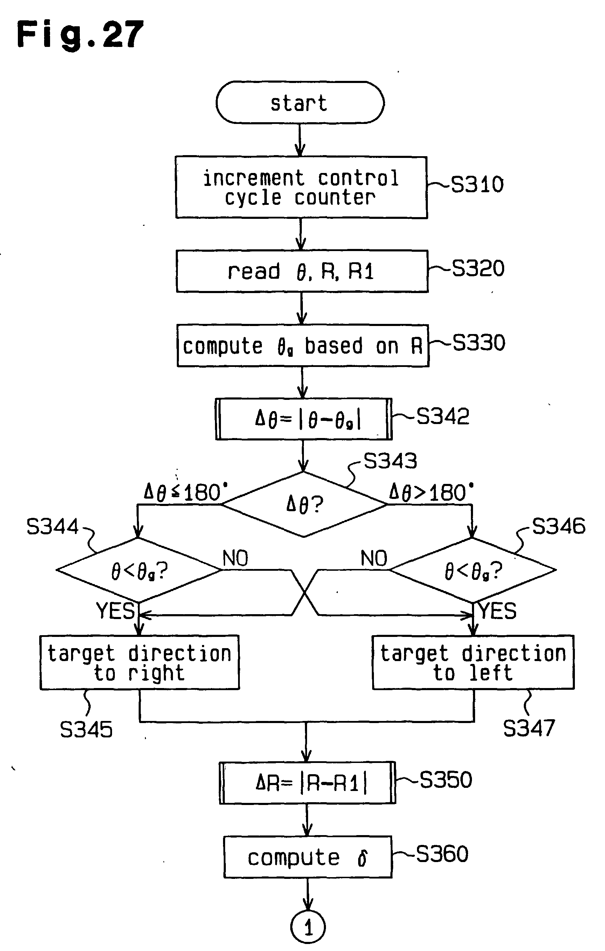

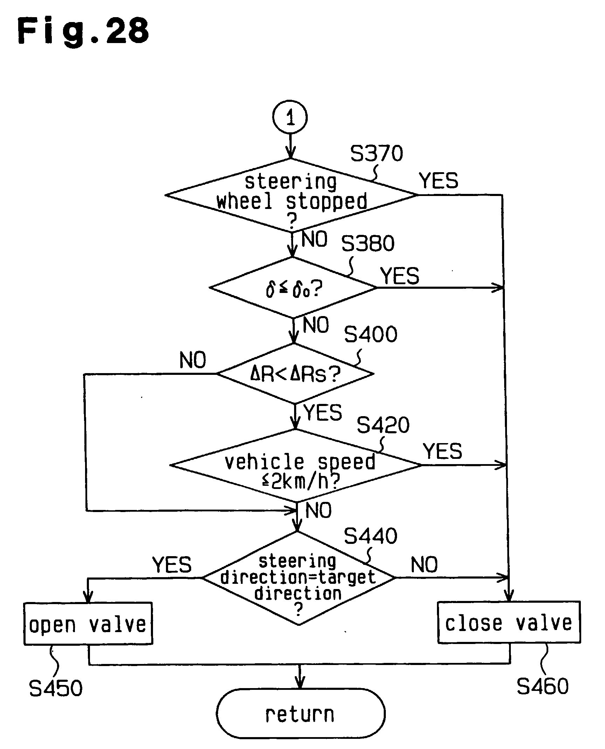

The flowchart of Fig. 27 is the same as that of Fig. 23. In the fourth embodiment, there is no correction prohibition region defined based on the vehicle wheel angle R. Also, knob position correction is not prohibited when the vehicle wheel angle R is in the straight range. Thus, steps 390 and 410 of Fig. 24 are omitted from the flowchart of Fig. 28. In the fourth embodiment, the vehicle is deemed to be stopped when the vehicle speed is lower than 2km/h. The CPU 51 judges whether vehicle speed is equal to or lower than 2km/h at step 420, instead of 5km/h.

When the vehicle wheels 19 are pivoted, friction between the tires and the road surface twists the tires. The twisting amount of the tires is greater when the speed of the vehicle is low. If the vehicle speed is lower than a certain value, the twisting of the tire disturbs the knob position control. Therefore, the threshold vehicle speed at which the vehicle is judged to be stopped is not limited to 2km/h. For example, the threshold speed may be from 0 to 5km/h.

The steering wheel speed less than 0.3 rps is defined as a low speed state. The threshold value ΔRs of the vehicle wheel angle change ΔR corresponds to the steering wheel rotation speed VH of 0.3rps. When the vehicle wheel angle change ΔR is less than the threshold value ΔRs, the steering wheel 2 is judged to be rotating slowly. The threshold rotation speed of the steering wheel 2 at which the steering wheel 2 is judged to be rotating slowly is not limited to speeds less than 0.3 rps but may be from 1/5 to 1/3 rps. Specifically, the threshold rotation speed may be any value at which the oil pressure of the steering cylinder 12 is great enough to act against the reaction force of the twisting of the tires when the vehicle is judged to be stopped.

The knob position correction procedure executed by the CPU 51 will now be described.

When the engine of the forklift F is running, the CPU 51 executes the knob position correction procedure of Figs. 27 and 28 at every predetermined intervals (for example, ten milliseconds).

When receiving either edge signal SE1, SE2, the CPU 51 executes the interrupt routine of Fig. 19. In the same manner as the third embodiment, the CPU 51 executes the judgment of the steering direction of the steering wheel 2, the counting by the steering counter 54, the judgment of whether the steering wheel is stopped, and the clearing of the control cycle counter 55.

The CPU 51 executes steps 310 to 380 of Figs. 27 and 28 in the same manner as in the third embodiment. If the discrepancy δ is equal to or less than the acceptable value δo at step 380, the CPU 51 moves to step 460 and opens the electromagnetic valve 22. If the discrepancy δ is greater than the acceptable value δo, the CPU 51 moves to step 400. At step 400, the CPU 51 judges whether the vehicle wheel angle change ΔR is less than the threshold value ΔRs. That is, the CPU 51 judges whether the steering wheel 2 is being rotated at a low speed (less than 0.3 rps in this embodiment) at which the orbitrol efficiency of the orbitrol 4 is equal to or greater than a reference value, which is greater than 100%. If the vehicle wheel angle change ΔR is not smaller than the threshold value ΔRs, the CPU 51 moves to step 440. If the vehicle wheel angle change ΔR is smaller than the threshold value ΔRs, the CPU 51 moves to step 420.

At step 420, the CPU 51 judges whether the vehicle speed is equal to or less 2km/h. If the vehicle speed is greater than 2km/h, the CPU 51 moves to step 440. If the vehicle speed is equal to or less than 2km/h, the CPU 51 moves to step 460 and closes the electromagnetic valve 22. At step 440, the CPU 51 judges whether the steering direction of the steering wheel 2 matches the target direction. If the steering direction matches the target direction, the CPU 51 moves to step 450 and opens the valve 22. If the steering direction does not match the target direction, the CPU 51 moves to step 460 and closes the valve 22.

Therefore, when the knob 2a is displaced from the normal position by an amount greater than the acceptable amount, the knob position correction is basically executed if the steering wheel 2 is being rotated such that the knob 2a is approaching the target position in the direction of the smaller rotation amount. In this case, however, if the steering wheel rotation speed is low and the vehicle is judged to be stopped, the knob position correction procedure is not executed.

When the vehicle wheel angle change ΔR is equal to or greater than the threshold value ΔRs, the steering wheel 2 is judged to be rotating at a middle speed. In this case, knob position correction is executed if the steering wheel 2 is rotated in a direction to decrease the knob position discrepancy regardless whether the vehicle is stopped or moving. If the electromagnetic valve 22 is opened when the vehicle is judged to be stopped, a rotation speed of the steering wheel 2 equal to or greater than 0.3 rps generates sufficient oil pressure in the steering cylinder 12 to act against the twisting of the tires. Racing of the steering wheel 2 in this state positively reduces the position discrepancy of the knob 2a.

When the vehicle wheel angle change ΔR is smaller than the threshold value ΔRs, the rotation speed of steering wheel 2 is judged to be low. In this state, the knob position correction procedure is executed when the steering wheel 2 is rotated in a direction to reduce the knob position discrepancy if the vehicle speed is equal to or greater than 2 km/h. When the vehicle F is traveling in a straight line, the operator manipulates the steering wheel 2 for fine-tuning the steering wheel angle θ. In this state, the knob position may be gradually displaced from the normal position. If the discrepancy exceeds an acceptable value, the knob position correction is executed to put the knob 2a back to the normal position.

When the vehicle is judged to be stopped, or when the vehicle speed is lower than 2 km/h, the electromagnetic valve 22 is not opened if the steering wheel 2 is rotated slowly. Specifically, when the steering wheel 2 is rotated at a speed lower than 0.3 rps, that is, when the vehicle wheel angle change ΔR is smaller than the threshold value ΔRs, the valve 22 is not opened even if the steering wheel 2 is being rotated in a direction to reduce the knob position discrepancy.

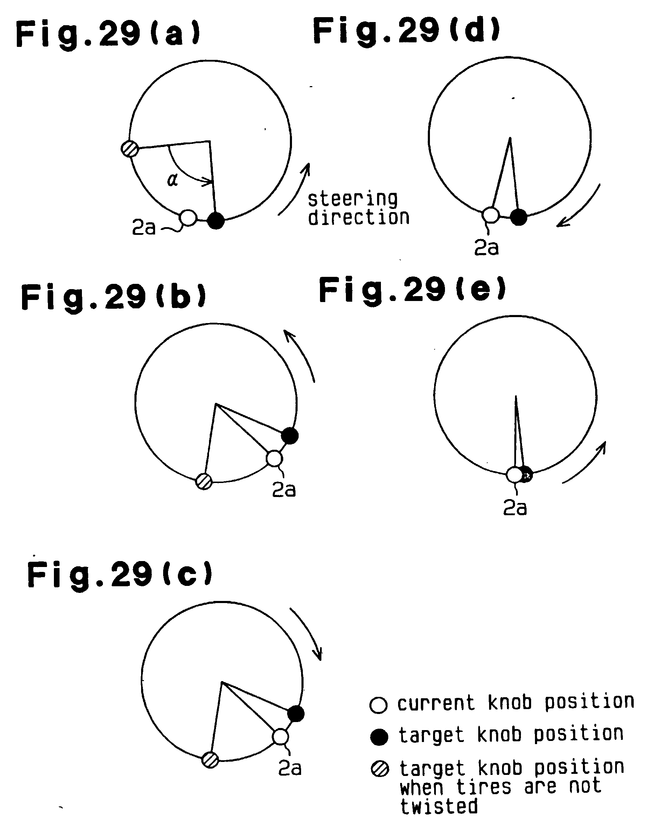

When the steering wheel 2 is rotated when the vehicle is not moving, friction between the wheels 19 and the road surface causes twisting by an angle α in the wheels 19 as shown in Fig. 29(a). If the steering wheel is rotated in the direction of the arrow, the current knob position approaches the target knob position. However, in this state, the electromagnetic valve 22 is not opened. Therefore, the steering wheel 2 is rotated with the discrepancy uncorrected as shown in Fig. 29(b). If the operator starts rotating the steering wheel 2 in the opposite direction, the current knob position is moved in a direction away from the target knob position as shown in Figs. 29(c) and 29(d). Therefore, the discrepancy is left uncorrected.

When the vehicle is not moving and the steering wheel 2 is rotated at a rate greater than 0.3 rps, the electromagnetic valve 22 is opened even if the tires are twisted as shown in Fig. 29(a). In this state, the oil pressure of the steering cylinder 12 is great enough to act against the twisting of the tires even if the valve 22 is opened. The knob 2a is therefore corrected to the target knob position as shown in Fig. 29(e).

The knob position is corrected when the knob 2a is moved in the target direction, or in the direction approaching the target position by the smaller rotation amount. In other words, in Fig. 26, the knob position is corrected when the steering wheel 2 is rotated in the direction of arrow a1 if the knob 2a is at the position shown by the solid circle and when the steering wheel is rotated in the direction of arrow a2 if the knob 2a is at the position shown by the broken line circle. The knob position is not corrected when the knob 2a is approaching the target position in the direction of the greater rotation amount. In other words, the knob position is not corrected when the steering wheel 2 is rotated in the direction of arrow x1 if the knob 2a is at the position shown by the solid circle line and when the steering wheel is rotated in the direction of arrow x2 if the knob 2a is at the position shown by the broken line circle. The target direction changes depending on whether the knob 2a is located farther from the target knob position by over 180°. The knob position is corrected only when the steering wheel 2 is rotated in a direction to reduces the discrepancy δ. Thus, when the valve is open 22, the discrepancy δ is always reduced.

The low slip type orbitrol 4 displaces sufficient oil to pivot the wheels 19 by a necessary amount even if the steering wheel 2 is rotated relatively slowly when the vehicle is not moving. Therefore, correcting the knob position when the vehicle is not moving does not disturb the operator when manipulating the steering wheel 2. Also, the low slip type orbitrol 4 transmits a relatively great resistance to the operator when the wheels 19 reach an endmost position, even if the knob position is being corrected. The operator therefore quickly senses that the wheels 19 at an endmost position.

Unlike the third embodiment, the fourth embodiment has the following advantages.

(1) If the electromagnetic valve 22 is opened when the tires of the wheels 19 are twisted, the reaction motion of the tires enlarges the discrepancy of the knob position. However, in this embodiment, the electromagnetic valve 22 is not opened if the steering wheel 2 is rotated slowly when the vehicle is judged to be stopped, or when the vehicle speed is lower than 2km/h. Thus, the discrepancy of the knob position is not enlarged when the vehicle is not moving and the tires are twisted. In the prior art apparatus, the steering wheel discrepancy is not corrected when the steering wheel is rotated relatively slowly. However, in this embodiment, the knob position is corrected even if the steering wheel is rotated slowly as long as the vehicle is not judged to be stopped. This permits the knob position to be corrected more frequently compared to the prior art apparatus.

(2) Since the low slip type orbitrol 4 is employed, the knob position is corrected even if the steering wheel 2 is being rotated relatively slowly when the vehicle is moving at a speed greater than 2km/h. Therefore, when the operator is fine tuning the steering wheel 2 while the vehicle is traveling in a straight line, a discrepancy of the knob position is corrected. In other words, the knob 2a is maintained at the normal position while the vehicle is traveling in a straight line.

(3) If the steering wheel 2 is rotated relatively slowly when the vehicle is at a halt, the low slip type orbitrol 4 permits the wheels 19 to be steered by an amount in accordance with the angle of steering wheel rotation.

(4) When the knob position is being corrected, the low slip type orbitrol 4 transmits resistance to the operator through the steering wheel if the vehicle wheels 19 reach an endmost position.

(5) Whether the displacement of the orbitrol 4 is sufficient is not directly detected based on the rotation speed of the steering wheel 2, but is detected based on the vehicle wheel angle change ΔR. That is, whether the oil pressure in the steering cylinder 12 is sufficient to act against twisting of the wheel tires is judged based on the vehicle wheel angle change ΔR. Therefore, the judgement can be executed based on the detection value of the potentiometer 28.

(FIFTH EMBODIMENT)

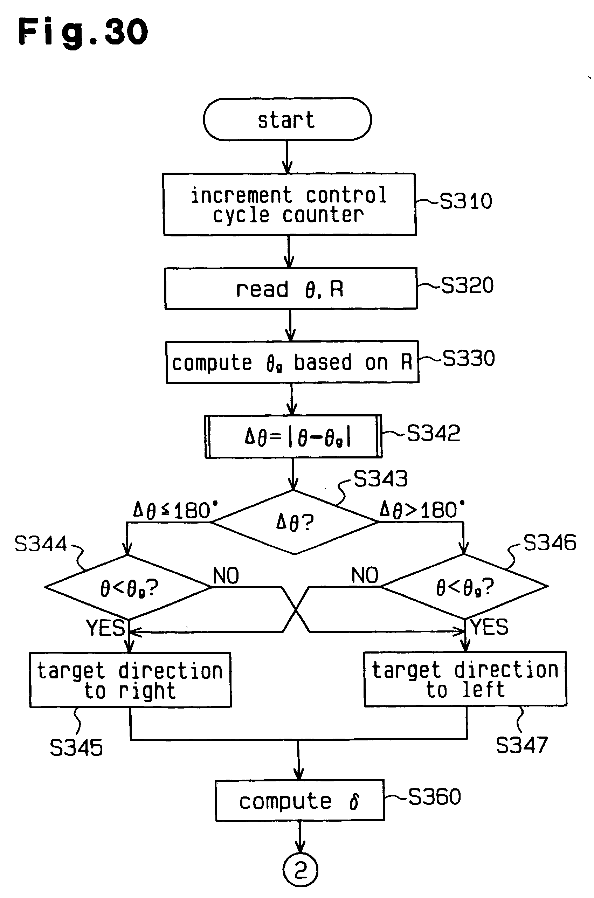

A fifth embodiment will now be described with reference to Figs. 30 to 33.

In this embodiment, when motion of the steering wheels 19 occurs due to returning of the tires from a twisted state, the knob position correction is stopped to prevent a discrepancy from being enlarged. The apparatus of the fifth embodiment is the same as that of the fourth embodiment. The difference is in the program data of the knob position correction. The differences from the first embodiment will mainly be discussed below, and like or the same reference numerals are given to those components that are like or the same as the corresponding components of the fourth embodiment.

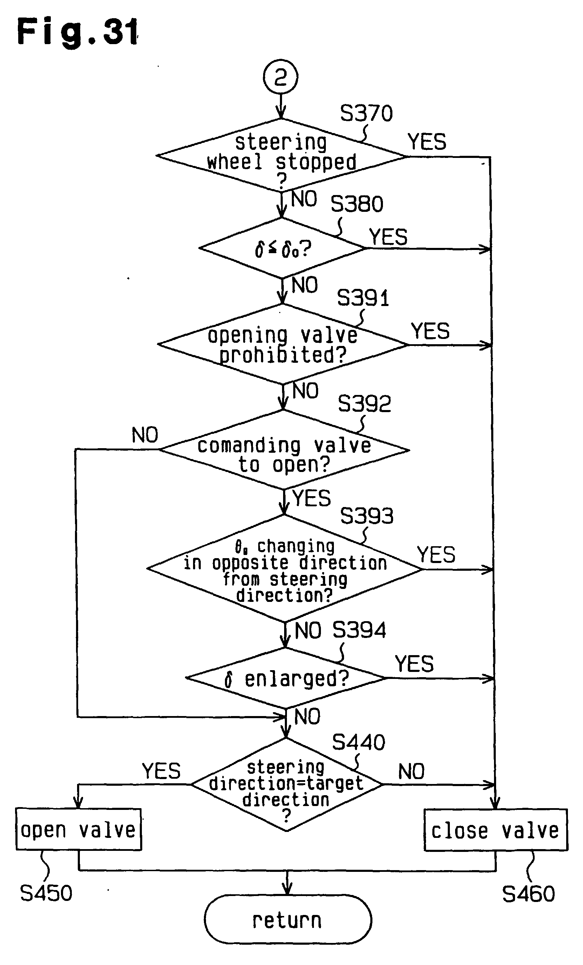

The ROM 52 stores the program data of the knob position correction shown in Figs. 30 and 31 and the program data of the interrupt routine of Fig. 19. Steps 393 and 394 of Fig. 31 corresponds to vehicle wheel motion detection means.

Opening the electromagnetic valve 22 when the tires of the vehicle wheels 19 are twisted can cause the wheels 19 to move. In this embodiment, the valve 22 is closed when such motion of the wheels 19 is detected, thereby preventing a knob position discrepancy from being enlarged. Therefore, unlike the fourth embodiment, the vehicle wheel angle change $\Delta R$ is not computed.

Steps 310 to 360 of the flowchart in Fig. 30 correspond to steps 310 to 360 of Fig. 27. Step 350 of the fourth embodiment for computing a wheel angle change $\Delta R$ is omitted. Unlike step 320 of the fourth embodiment, the CPU 51 reads the vehicle wheel angle R1. The other steps are the same as the correspondingly numbered steps.

As shown in the flowchart of Fig. 31 steps 370, 380, 440 to 460 correspond to and are the same as steps 370, 380, 440 to 460 of Fig. 28, respectively.

When returning motion of the wheels 19 from a twisted state is detected, opening of the valve 22 is prohibited for a predetermined period (for example, tens to hundreds of milliseconds). At step 391, whether opening the valve 22 is currently prohibited is judged. When detecting a returning motion of the wheels 19, the CPU 51 sets a prohibition flag to one. While the value of the prohibition flag is one, the CPU 51 determines that opening the valve 22 is prohibited.

At step 392, whether the CPU 51 is currently opening the valve 22 is judged. The CPU 51 judges that valve 22 is open when the valve flag, which is also used in the fourth embodiment, is set to one.

At steps 393 and 394, returning motion of the wheels 19 from a twisted state is detected. Steps 393 and 394 are executed when the electromagnetic valve 22 is opened. Returning motion of the wheels 19 from a twisted state is classified into first motion and a second motion. The first motion is pivoting motion of the wheels 19 in a direction opposite to the steering direction of the steering wheel 2. The second motion is pivoting motion of the wheels 19 in the same direction as the steering direction of the steering wheel 2 by an amount greater than the amount corresponding to the rotation amount of the steering wheel 2. At step 393, the first motion of the wheels 19 is indirectly detected by judging whether the target steering angle $\theta g$ is being shifted in a direction opposite to the steering direction of the steering wheel 2. At step 394, the second motion of the wheels 19 is indirectly detected by judging whether the discrepancy $\delta$ is being enlarged.

In this embodiment, the CPU 51 corrects the knob position in the following manner. Every time the interrupt routine is executed, the value of the steering wheel steering direction flag is set to represent the steering direction of the steering wheel 2. When the steering wheel 2 is not being rotated, the steering wheel rotation halt flag is set to one. Also, every time the knob position correction procedure is executed (every ten milliseconds), the value of the target direction flag is set to represent the target direction. When the opening of the electromagnetic valve 22 is not prohibited, the prohibition flag is at a reset state if the valve 22 is closed.

For example, when the knob 2a is out of position and the discrepancy amount $\delta$ exceeds the acceptable value $\delta o$, the electromagnetic valve 22 is opened to correct the knob position if the steering wheel 2 is rotated in the target direction. At this time, the valve flag is set to one to indicate that the valve 22 is open. In the subsequent routine, the CPU 51 judges that the valve 22 is open referring the value of the valve flag and moves to step 393.

At step 393, the CPU 51 judges whether the target steering wheel angle $\theta g$ is being shifted in a direction opposite to the steering direction of the steering wheel 2. In the fourth embodiment, the CPU 51 reads the value of the old target steering wheel angle $\theta g$ from a time that is earlier by a time period $n \cdot t_o$, which was stored as a value $\theta g1$ in the RAM 53. The CPU 51 then computes the change $\Delta \theta g$ of the target angle $\theta g$ in the time period $n \cdot t_o$ by an equation $\Delta \theta g = \theta g - \theta g1$. The CPU 51 detects whether the target wheel angle $\theta g$ is being shifted in a direction opposite to the steering direction of the steering wheel 2 referring to the sign (positive of negative) of the change $\Delta \theta g$. If the change $\Delta \theta g$ is greater than zero ($\Delta \theta g > 0$), the CPU 51 judges that the wheels 19 are being pivoted to the right. When the change $\Delta \theta g$ is smaller than zero ($\Delta \theta g < 0$), the CPU 51 judges that the wheels 19 are being pivoted to the left. However, if the absolute value of the change $\Delta \theta g$ ($|\theta g - \theta g1|$) indicates that the target steering wheel angle $\theta g$ has changed by an amount that cannot be physically controlled with the steering wheel 2 within the time period $n \cdot t_o$, the count value C is judged to have passed by the boundary between zero and one-hundred fifty-nine. In this case, if the change $\Delta \theta g$ is greater than zero ($\Delta \theta g > 0$), the CPU 51 judges that the wheels 19 are being pivoted to the left. When the change $\Delta \theta g$ is smaller than zero ($\Delta \theta g < 0$), the CPU 51 judges that the wheels 19 are being pivoted to the right.

For example, if the steering wheel 2 is rotated in a direction shown by the arrow in Fig. 29(a) and the valve 22 is opened, the wheels 19 have the first motion. That is, the wheels 19 return from a twisted state in a direction opposite to the steering direction of the steering wheel 2. If the CPU 51 judges that the target steering wheel angle $\theta g$ is shifted in a direction opposite to the steering direction of the steering wheel 2 at step 393, the CPU 51 sets the prohibition flag to one. The CPU 51 then moves to step 460 and closes the electromagnetic valve 22. Thereafter, the prohibition flag is maintained at one for a predetermined period (for example, tens to hundreds milliseconds). Thus, the CPU 51 judges that opening of the valve 22 is prohibited at step 391 and continues closing the valve 22. When the prohibition flag is set to zero after the predetermined period, the CPU 51 moves from step 392 to step 393. At step 393, the CPU 51 judges whether the wheels 19 have the first motion. Until the returning motion of the wheels 19 from a twisted state is not detected at step 393, the CPU 51 repeatedly judges whether the wheels 19 have the first motion at every predetermined intervals (for example, one hundred milliseconds). Until the wheels 19 are no longer twisted and the first motion of the wheels 19 is not detected at step 393, opening of the electromagnetic valve 22 is prohibited. Thereafter, the valve 22 is maintained closed except when the CPU 51 judges whether the wheels 19 have the first motion.

After opening the valve 22, the CPU 51 executes step 394 if the first motion is not detected at step 393. At step 394, the CPU 51 judges whether the discrepancy amount $\delta$ is being enlarged. That is, the CPU 51 reads the value of the discrepancy amount $\delta$ corresponding to a time that was earlier by the time period $n \cdot t_o$, which was stored in the RAM 53 as a datum $\delta 1$. The CPU 51 computes the change $\Delta\delta$ of the discrepancy $\delta$ in the time period $n \cdot t_o$ by an equation $\Delta\delta = \delta - \delta 1$. If the change $\Delta\delta$ has a positive value, the CPU 51 judges that the discrepancy $\delta$ is being enlarged.

For example, the steering wheel 2 is being rotated to the right, or in a direction shown by the arrow in Fig. 40(c) when the current knob position and the target knob position are as in Fig. 40(c). In this state, due to the return motion of the twisted wheels 19, the wheels 19 are pivoted by an amount greater than the amount corresponding to the steering amount of the steering wheel 2. That is, the wheels 19 have the second motion. Accordingly, the target knob position is shifted in the steering direction of the steering wheel 2 faster than the current knob position, which enlarges the discrepancy $\delta$. If the CPU 51 detects the second motion at step 394 by judging that the discrepancy $\delta$ is being enlarged, the CPU 51 sets the prohibition flag to one and moves to step 460. At step 460, the CPU 51 closes the electromagnetic valve 22. Thereafter, the CPU 51 judges that opening of the valve 22 is prohibited at step 391 for a predetermined period (for example, tens to hundreds milliseconds). The CPU 51 therefore keeps the valve 22 closed. When the prohibition flag is set to zero after the predetermined period, the CPU 51 executes step 394 again. Until the second motion of the wheels 19 is not detected at step 394, the CPU 51 repeatedly judges whether the wheels 19 have the second motion at every predetermined interval (for example, one hundred milliseconds). Until the wheels 19 are no longer twisted and the second motion of the wheels 19 is not detected at step 394, opening of the electromagnetic valve 22 is practically prohibited. The discrepancy $\delta$ is therefore maintained and is not enlarged.

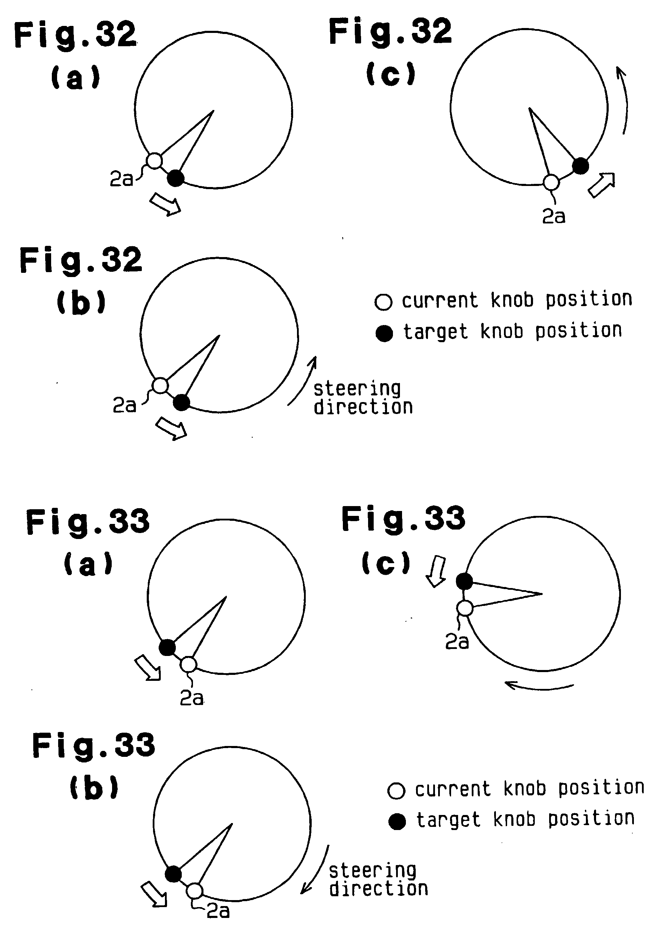

When the vehicle is turning, the difference between moments acting on the wheels 19 oversteers the wheels 19. For example, suppose that an oversteering force shown by the blank arrow of Fig. 32(a) is acting on the wheels 19, the knob 2a is slowly shifted toward the target position, and the electromagnetic valve 22 is opened. If the oil pressure in the steering cylinder 12 is not high enough to act against the oversteering force acting on the wheels 19, the second motion of the wheels 19 is detected immediately after the valve 22 is opened. That is, the wheels 19 are pivoted in the same direction as the steering direction of the steering wheel 2, which immediately causes the valve 22 to be closed. Therefore, rotating the steering wheel 2 in the target direction as shown in Fig. 32(c) does not enlarge the discrepancy $\delta$ by a significant amount.

Also, for example, suppose that an oversteering force shown by the blank arrow of Fig. 33(a) is acting on the wheels 19 and the electromagnetic valve 22 is opened by slow rotation of the steering wheel 2 in a direction shown by the solid arrow in Fig. 33(b). If the oil pressure in the steering cylinder 12 is not high enough to act against the oversteering force, the first motion of the wheels 19 is detected immediately after the valve 22 is opened. That is, the wheels 19 are pivoted in a direction opposite to the steering direction of the steering wheel 2, which immediately causes the valve 22 to be closed. Therefore, rotating the steering wheel 2 in the target direction as shown in Fig. 33(c) does not enlarge the discrepancy $\delta$ by a significant amount.

If the steering wheel 2 is rotated slowly and the valve 22 is open while the vehicle is turning, the wheels 19 are oversteered. However, the valve 22 is closed at the time when the oversteering occurs. Therefore, manipulation of the steering wheel 2 does not disturb the operator when the vehicle is turning.

When the vehicle is turning and the valve 22 is opened by manipulation of the steering wheel 2, the first and second motions of the wheels 19 are not detected if the oil pressure in the steering cylinder 12 is high enough to act against the oversteering force acting on the wheels 19. Therefore, the valve 22 is maintained open, which reduces the discrepancy $\delta$ as the steering wheel 2 is rotated.

In the fifth embodiment, return motion of the wheels 19 from a twisted state is detected when the valve 22 is opened. Upon detection of the return motion, the valve 22 is immediately closed. Therefore, when the vehicle is at a halt with the wheels 19 twisted, the knob position correction does not enlarge the position discrepancy of the knob 2a. Also, when the steering wheel 2 is rotated relatively slowly, the knob position is corrected if the wheels 19 are returning from a twisted state. As a result, the knob position is corrected more frequently.

As described above, the fifth embodiment prevents a knob position discrepancy from being enlarged if the knob position correction procedure is executed when the vehicle is not moving. When the vehicle is turning, oversteering force acting on the wheels 19 can enlarge the knob position discrepancy $\delta$ when the knob position is being corrected. The fifth embodiment also prevents such an enlargement of the discrepancy $\delta$. When oversteered, the wheels 19 have either the first motion or the second motion. When detecting either the first motion or the second motion, the CPU 51 closes the electromagnetic valve 22, which substantially prevents oversteering of the wheels 19. Thus, the operator does not feel disturbed when the vehicle is turning. Specifically, the steering wheel angle θ accurately corresponds to the rotation amount of the steering wheel 2 when the vehicle is turning. The first motion and the second motion are detected based on the steering wheel angle and the target steering wheel angle, which are used to compute the knob position discrepancy. In other words, data used in the knob position correction is also used for detecting the motion of the wheels 19. Further, the fifth embodiment has the same advantages as the fourth embodiment.

The present invention may be alternatively embodied in the following forms:

(1) The knob position may be always corrected by returning the knob 2a along the path that the knob 2a took when being displaced. In this case, if the actual discrepancy is greater than 360°, the knob position is corrected by a correction amount that is 360° smaller than the actual discrepancy.

(2) Instead of the gears 29 having a gear ratio of one, a reduction gear, such as a worm gear, may be used to couple the steering shaft 3 with the potentiometer 27 such that the absolute angle of the steering wheel 2 is detected by the potentiometer 27. In this case, the detection value of the potentiometer 27 is converted to a relative angle of the steering wheel 2, or the steering wheel angle θ. The steering wheel angel θ is compared with a target steering wheel angle θg, which is computed based on the vehicle wheel angle R. The steering wheel angle detection means includes computation means (for example, means for calculating or performing computation based on a map) for obtaining the relative steering wheel angle θ based on the absolute steering wheel angle θ. Although this construction requires computation means for obtaining the relative steering wheel angle θ based on the absolute steering wheel angle θ, the undetectable range is eliminated even if the potentiometer 27 is used.

(3) The ratio of the vehicle wheel angle R to the target steering wheel angle θg on the control target line L may be smaller than the ideal control line at which the orbitrol efficiency is 100% thereby permitting the knob position correction to be executed more frequently as in the apparatus of Publication No. 3-30544. The increased frequency of the correction permits the knob 2a to be securely returned to the neutral position.

(4) In the first embodiment, a detection value of the potentiometer 27 that corresponds to the neutral position of the knob 2a is not limited to the accurate center of the detectable range. The detection value corresponding to the neutral position may be any position if it is separated from the undetectable range of the potentiometer 27 by a certain amount (for example, 100°). In this construction, when the steering wheel 2 is manipulated in the vicinity of the neutral position, the steering wheel 2 is unlikely to enter the undetectable range. This construction permits the knob position to be corrected more frequently and accurately returned to the neutral position.

(5) In the second to fifth embodiments, the neutral position of the knob 2a is detected by the steering counter 54. The count value of the steering counter 54 corresponding to the neutral position is set at the center of the detectable range of the count value, or is separated from the boundary of the count values (zero and one-hundred fifty-nine in the second embodiment) by 180°. However, the count value corresponding to the neutral position may be any value as long as it is in the vicinity of the center of the detectable range. Specifically, the count value corresponding to the neutral position may be any value as long as it is separated from the boundary of the count value by a certain amount (for example, by an amount equal to or greater than 100°). In this construction, when the steering wheel 2 is manipulated in the vicinity of the neutral position, the steering wheel 2 is unlikely to pass by the boundary of the count value.

(6) In the second to fifth embodiments, a provisional target direction may be determined based on the difference between the target steering wheel angle θg and the current steering wheel angle θ as in the first embodiment. When the difference Δθ (Δθ=|θ-θg|) is greater than 180°, the electromagnetic valve 22 is open if the provisional target direction does not match the steering direction of the steering wheel 2.

(7) In the first embodiment, the steering direction of the steering wheel 2 is detected by comparing the current steering wheel angle θ and the steering wheel angle θ1. corresponding to a time that is earlier by a predetermined period $n \cdot t_o$. However, a sensor for detecting the steering direction may be used.

(8) In the second to fifth embodiment, the rotation detector is not limited to the encoder. Other type of rotation detectors that detect the relative angle of the steering wheel along the entire turn (360°) of the steering wheel 2 and output a detection signal corresponding to the detected wheel angle may be employed.

(9) In the second to fifth embodiments, the steering direction of the steering wheel 2 may be detected by a logical circuit based on signals SS1, SS2, SSC, SE1, SE2 and SEC. In this case, the CPU 51 judges the steering direction based on the level of a signal from the logic circuit. The CPU 51 therefore does not have to perform a computation to detect the steering direction.

(10) In the third to fifth embodiments, whether the steering wheel 2 is rotating slowly is detected by comparing the vehicle wheel angle change $\Delta R$ and the threshold value $\Delta Rs$. As in the second embodiment, two values may be used as the threshold value $\Delta Rs$. When the valve 22 is opened, the value r2 is used as the threshold value $\Delta Rs$. When the valve 22 is closed, the value r1 is used as the threshold value $\Delta Rs$.

(11) In the fourth embodiment, the rotation speed of the steering wheel 2 may be computed based on the change of the count value C of the steering counter 54 per unit time or based on the count value C1 of the control cycle counter 55. Whether the rotation speed is lower than a predetermined value may be directly detected based on the detection value of the rotary encoder 38, which detects the rotation angle of the steering wheel 2. If the rotation speed is indirectly detected based on the vehicle wheel angle change $\Delta R$, racing of the steering wheel 2 may be erroneously detected as a low speed rotation of the steering wheel 2, which may result in intermittent deactivation of the electromagnetic valve 22. However, if the rotation speed of the steering wheel 2 is directly detected, whether the steering wheel 2 is being rotated slowly is accurately detected even if the steering wheel 2 is racing.

(12) In the fifth embodiment, opening of the electromagnetic valve 22 may be prohibited until the steering direction of the steering wheel 2 is switched. This eliminates the necessity for detecting the motion at every predetermined interval. In other words, the valve 22 does not need to be opened for checking the motion of the wheels 19. Accordingly, the discrepancy $\delta$ is prevented from being gradually increased every time the motion of the wheels 19 is checked.

(13) In the fifth embodiment, the electromagnetic valve 22 may be closed only when the second motion of the wheels 19 is detected, or only when the target knob position is being moved away from the current knob position. In this case, the operator feels disturbed when the wheels 19 have the first motion. However, the knob position discrepancy is not enlarged.

(14) The actuator in the power steering apparatus is not limited to a hydraulic cylinder.

(15) The present invention may be embodied for correcting the position of a steering wheel having no knob 2a. In this case, the steering wheel angle is corrected to the normal position, which corresponds to the angle of the wheels 19.

(16) The present invention may be applied to other industrial vehicles that have power steering apparatuses. The present invention may also be applied to other type of vehicles, such as passenger cars.

**Claims**

1. A steering wheel angle correction device for a power steering apparatus, wherein the power steering apparatus includes an oil supply device and an actuator, the oil supply device discharging oil, the amount of which is proportional to the rotation amount of a steering wheel, the actuator being driven by the oil discharged by the oil supply device to pivot a wheel, the correction device comprising:

   steering wheel angle detection means (27, 38) for detecting the actual position of the steering wheel (2) as a relative angle from a reference position;
   wheel angle detection means (28) for detecting the wheel angle of the wheel (19);
   target position computation means(30, 51) for computing a correct position corresponding to the wheel angle as a relative angle from the reference position and setting the computed correct position as a target position;
   correction means (22) for reducing the actuating amount of the actuator (12) in relation to the manipulation amount of the steering wheel (2); and
   control means (30, 37, 50, 51) for controlling the correction means (22) such that the discrepancy between the actual position of the steering wheel and the target position is reduced until the discrepancy is within an acceptable range.

2. The steering wheel angle correction device for a power steering apparatus according to claim 1; wherein the control means comprises:

   target direction detection means for detecting a target direction, in which the steering wheel moves from the actual position to the target position by the shortest path;
   manipulation direction detection means for detecting the rotation direction of the steering wheel; and

first correction execution means for actuating the correction means (22) only when the rotation direction of the steering wheel (2) matches the target direction.

3. The steering wheel angle correction device for a power steering apparatus according to claim 2, wherein the control means comprises:

discrepancy judgement means for judging whether the discrepancy between the actual position and the target position via the shortest path is greater than a predetermined value; and

second correction execution means for actuating the correction means regardless of the rotation direction of the steering wheel (2) when the discrepancy judgement means judges that the discrepancy is greater than the predetermined value, wherein when the discrepancy judgment means judges that the discrepancy is equal to or smaller than the predetermined value and the rotation direction matches the target direction, the first correction execution means actuates the correction means.

4. The steering wheel angle correction device for a power steering apparatus according to claim 3 wherein, when the relative angular discrepancy between the actual position and the target position is equal to or smaller than 180°, the first correction execution means executes the correction only when the steering wheel (2) is rotated in a direction to reduce the discrepancy, wherein when the discrepancy between the actual position and the target position is greater than 180° the first correction execution means executes the correction only when the steering wheel (2) is rotated in a direction to enlarge the discrepancy by one revolution.

5. The steering wheel angle correction device for a power steering apparatus according to any one of claims 1 to 4, wherein the correction means comprises an electromagnetic valve (22), which is opened and closed by a command from the control means (30, 37, 50, 51), and wherein the electromagnetic valve (22) is located in an oil passage for returning some of the oil discharged from the oil supply device (4) to an oil tank (8) before the oil is supplied to the actuator (12).

6. The steering wheel angle correction device for a power steering apparatus according to claim 1, wherein the target position computation means comprises memory means (31, 52) for storing a map for obtaining the target position of the steering wheel (2) as a relative position based on the wheel angle of the wheel (19).

7. The steering wheel correction device for a power steering apparatus according to claim 1, wherein the steering wheel angle detection means (27, 38) includes a rotation detector (38), wherein the rotation detector (38) detects the actual position of the steering wheel (2) in the entire range of one revolution of the steering wheel (2) from the reference position.

8. The steering wheel angle correction device for a power steering apparatus according to claim 2, wherein the steering wheel angle detection means (27, 38) detects the actual position of the steering wheel before and after a predetermined period to obtain an old detection value and a new detection value, and the manipulation direction detection means computes the rotation direction of the steering wheel (2) by comparing the old detection value and the new detection value, wherein when the difference between the old detection value and the new detection value is equal to or greater than a predetermined value, which represents a difference that cannot be physically recovered by rotation of the steering wheel (2), the manipulation direction detection means judges that the steering wheel (2) has passed by the boundary of a detectable range of the steering wheel angle detection means (27, 38) within the predetermined period and judges that the rotation direction of the steering wheel (2) is opposite from the rotation direction computed by comparing the old detection value and the new detection value.

9. The steering wheel angle correction device for a power steering device according to any one of claims 1, 7 and 8:

wherein the correct position of the steering wheel (2) corresponds to a wheel angle at which the vehicle travels in a straight line, and the correct position is set as a neutral position of the steering wheel (2), wherein the steering wheel angle detection means (27, 38) is arranged such that the neutral position of the steering wheel (2) is detected in the vicinity of the center of the detectable range of the steering wheel angle detection means (27, 38).

10. The steering wheel angle correction device for a power steering apparatus according to claim 1, wherein the oil supply device comprises a low slip type oil supply device, which increases the discharge rate in a low speed range of the steering wheel rotation, wherein the steering wheel angle correction device further comprises:

correction means (22) for returning some of oil discharged from the oil supply device to an oil tank (8) to cause the steering wheel (2) to race; slow rotation detection means for detecting that the steering wheel rotation speed is lower than a predetermined value;

vehicle stop detection means for detecting a stopped state of a vehicle (F), at which steering the wheel (19) generates friction equal to or greater than a predetermined value between the wheel (19) and the road surface; and

first correction prohibition means for prohibiting actuation of the correction means when the slow rotation detection means detects that the steering wheel rotation speed is low and the vehicle stop detection means judges that the vehicle is stopped.

11. The steering wheel angle correction device for a power steering apparatus according to claim 10, wherein the slow rotation detection means indirectly detects that the steering wheel angle speed is low based on a change of the wheel angle of the wheel (19) in a predetermined period.

12. The steering wheel angle correction device for a power steering apparatus according to claim 1, wherein the oil supply device comprises a low slip type oil supply device, which has an increased the discharge rate in a low speed range of the steering wheel rotation, wherein the steering wheel angle correction device further comprises:

wheel motion detection means for detecting a motion of the wheel (19) that is likely to enlarge a discrepancy of correspondence between the actual position of the steering wheel (2) and the wheel angle of the wheel (19) when the correction means is actuated; and

correction stop means for detecting a discrepancy between the actual position of the steering wheel (2) and the wheel angle of the wheel (19), wherein when the steering wheel (2) is manipulated in a direction to correct the discrepancy, the correction stop means actuates the correction means, and wherein if the wheel motion detection means detects the motion of the wheel (19) when the correction means (22) is actuated, the correction stop means stops the actuation of the correction means (22).

13. The steering wheel angle correction device for a power steering apparatus according to claim 12, wherein the correction stop means actuates the correction means only when the steering wheel (2) is manipulated to approach the target position from the actual position in the direction of the shorter path.

14. The steering wheel angle correction means for a power steering apparatus according to claim 12, wherein pivoting of the wheel (19) in a direction opposite to the rotation of the steering wheel (2) is defined as a first motion, and pivoting of the wheel (19) in the same direction as and by a greater amount than the rotation of the steering wheel (2) is defined as a second motion, and wherein the wheel motion detection means detects at least the second motion.

15. The steering wheel angle correction device for a power steering apparatus according to claim 14, wherein the wheel motion detection means detects the first motion and the second motion.

16. The steering wheel angle correction device for a power steering apparatus according to either one of claims 14 and 15, wherein the wheel motion detection means detects the first motion when the target position approaches the actual position and detects the second motion when the discrepancy is enlarged.

17. The steering wheel correction device for a power steering apparatus according to any one of claims 1 to 4, 6 to 8 and 10 to 15, further comprising:

wheel angle judgment means for detecting whether the wheel angle of the wheel detected by the wheel angle detection means is equal to or greater than a limit angle, which is in the vicinity of an endmost position; and

second correction prohibition means for prohibiting actuation of the correction means when the wheel angle judgment means judges that the wheel angle is equal to or greater than the limit angle.

18. The steering wheel angle correction device for a power steering device according to any one of claims 1 to 4, 6 to 8 and 10 to 15, further comprising:

rotation speed detection means for directly or indirectly detecting the rotation speed of the steering wheel (2);

third correction prohibition means for prohibiting actuation of the correction means when the steering wheel rotation speed is equal or lower than a predetermined value;

straight line judgment means for judging whether the wheel angle of the wheel (19) is in a straight range; and

straight range correction execution means, wherein when the wheel angle is in the straight range, the straight range correction execution means causes the correction means to correct the steering wheel position even if the steering wheel rotation speed is equal or lower than the predetermined value.

**19.** A vehicle comprising the steering wheel angle correction device for a power steering apparatus according to any one of claims 1 to 4, 6 to 8 and 10 to 15.

**20.** A vehicle comprising the steering wheel angle correction device according to claim 5.

**21.** A vehicle comprising the steering wheel angle correction device according to claim 9.

**22.** A vehicle comprising the steering wheel angle correction device according to claim 16.

**23.** A vehicle comprising the steering wheel angle correction device according to claim 17.

**24.** A vehicle comprising the steering wheel angle correction device according to claim 18.

# Fig.1

# Fig.2

● target knob position
○ current knob position

A° ⊢ ⟍⟋ x1 x2 ⊣ (360-A°)

2a ⟋○ a1 a2 ◌ ⟍—2a

# Fig.3

2a

● target knob position
○ current knob position

○ c
⟋b

A° ⊢ ⊣ (360-A°)

●

# Fig.4

+150°

2

2a

undetectable
range

−150°

detectable
range

0°

2a

# Fig.5

target steering
wheel angle θg

M1

+150°

L

0°

−150°

0

leftward
steering
(−)

vehicle wheel
angle R

rightward
steering
(+)

# Fig.6

EP 0 983 928 A1

# Fig.7

```
                    ┌─────────────┐
                    │    start    │
                    └──────┬──────┘
                           ↓
                   ┌──────────────┐
                   │  read θ, R   │──S10
                   └──────┬───────┘
                          ↓
                   ┌──────────────┐
                   │ compute θ_g  │──S20
                   │  based on R  │
                   └──────┬───────┘
                          ↓          S30
                      ╱───────────╲
                     ╱  θ_g out of  ╲   YES
                    ╱  detectable range ╲──────→ (2)
                     ╲      ?      ╱
                      ╲───────────╱
                          │NO
                          ↓          S40
                      ╱───────────╲
                     ╱  θ out of    ╲   YES
                    ╱  detectable range ╲──────→ (3)
                     ╲      ?      ╱
                      ╲───────────╱
                          │NO
                          ↓
                 ┌──────────────────┐
                 │ read θ1 of time n·t_0 │──S50
                 │ before from counter  │
                 └────────┬─────────┘
                          ↓           S60
         θ=θ1        ╱───────────╲       θ>θ1
      ┌─────────────╱  compare     ╲──────────────┐
      │             ╲  θ with θ1   ╱               │
      │              ╲     ?      ╱                │
      │               ╲─────────╱                 │
      │                   │θ<θ1                    │
  S70 ↓                   ↓  S80              S90  ↓
 ┌──────────────┐    ╱───────────╲        ╱───────────╲
 │steering wheel│   ╱  |θ-θ1| ≧θ_B ╲ YES YES ╱ |θ-θ1| ≧θ_B ╲
 │   stopped    │   ╲      ?      ╱ ╲     ╱ ╲      ?      ╱
 └──────┬───────┘    ╲─────────╱     ╲ ╱    ╲─────────╱
        │                │NO          ╳        │NO
   S100 │                ↓           ╱ ╲       ↓  S110
        │        ┌──────────────┐       ┌──────────────┐
        │        │steering direction│   │steering direction│
        │        │   to left    │       │   to right   │
        │        └──────┬───────┘       └──────┬───────┘
        │               │                      │
        └───────────────┼──────────────────────┘
                        ↓
                      ( 1 )
```

# Fig.8

① S120

$\theta < \theta_g$   compare $\theta$ with $\theta_g$ ?   $\theta > \theta_g$

S130 — target direction to the right

S140 — target direction to the left

$\Delta\theta = |\theta - \theta_o|$ — S150

S160 — steering wheel stopped ?   YES / NO

S170 — $\Delta\theta < 5°$ ?   YES / NO

S180 — $\Delta\theta$ ?
$\Delta\theta \leq A°$
$A° < \Delta\theta < (360-A)°$
$\Delta\theta \geq (360-A)°$

S190 — steering direction=target direction ?   NO / YES

S200 — steering direction=target direction ?   NO / YES

②

③

close valve — S210

S220 — open valve

return

# Fig.9

# Fig.10

# Fig.11

# Fig.12

rightward rotation | leftward rotation

steering counter

77 78 79 80 81 82 83 84 | 84 83 82 81 80 79 78 77 76

SS1

SS2

SSC

# Fig.13

target steering wheel angle θ₀

M2

L

+180°

0°

-180°

LE LK leftward steering (-)

0

rightward steering (+)

RK RE

vehicle wheel angle R

# Fig.14

EP 0 983 928 A1

# Fig.15

● target knob position
○ current knob position

A° ⊢ ⊣ (360−A)°

x1 x2
a1 a2
2a ○ ● ○ ⌐2a

# Fig.16

● target knob position
○ current. knob position

2a ○ ↗c
↓b
A° ⊢ ⊣ (360−A)°

●

# Fig.17

# Fig.18

②

S370

steering wheel stopped ? — YES

NO

S380

$\delta \leqq \delta_0$? — YES

NO

S390

vehicle wheel angle within prohibition range ? — YES

NO

S400

NO — $\Delta R < \Delta Rs$?

YES

S410

vehicle wheel angle in straight line range ? — NO

YES

S420

vehicle speed ≦5km/h? — YES

NO

S430

NO — $\delta \leqq A°$?

YES

S440

YES — steering direction=target direction ? — NO

| open valve | | close valve |

S450

S460

return

# Fig.19

```
                    ( interrupt routine )
                              │
                              ▼      S510
    first                 ╱ source of ╲        second
  transistor           ╱ starting edge ╲     transistor
                      ╱      signal?     ╲
            S520  ┌──◄                    ►──┐  S530
            NO    │   ╲ rising ╱    ╲ rising ╱   │  NO
      S550 ┌──────▼──┐ ╲ edge? ╱    ╲ edge? ╱ ┌──▼──────┐ S570
            ╱ output  ╲    │ YES      │ YES     ╱ output  ╲
      H   ◄  level of  ►   ▼   S540   ▼  S560  ◄ level of  ►   L
      ┌───╲  second   ╱ ┌────────┐  ┌────────┐ ╲  first   ╱───┐
      │    ╲transistor╱  ╱ output  ╲  ╱ output  ╲ ╲transistor╱  │
      │     ╲   ?    ╱  ◄ level of  ► ◄ level of  ► ╲   ?    ╱   │
      │        │      ╲  second   ╱ L  H╲  first   ╱     │      │
      │     L  │   H   ╲transistor╱      ╲transistor╱  L │   H  │
      │        │        ╲  ?    ╱          ╲  ?    ╱     │      │
      │        │          │              │          │      │
      │        │          ▼H          L▼          ▼L        │H
      └────────┼──────────┴──────┬──────┴──────────┼────────┘
               │                 │                 │
               ▼                 │                 ▼
   ┌─────────────────────────┐   │   ┌──────────────────────────┐
   │ steering direction to left│  │  │ steering direction to right│
   └─────────────────────────┘   │   └──────────────────────────┘
           │                      │              │
         S590                     ▼            S580
              ┌──────────────────────────┐
              │ change counter           │
              │ value according to  ├── S600
              │ steering direction       │
              └──────────────────────────┘
                          │
                          ▼       S610
                      ╱         ╲    NO
                     ◄  C1≥Co?   ►────┐
                      ╲         ╱     │
                          │ YES       │
                          ▼           │
          ┌──────────────────────┐   │
   S620 ──┤ steering wheel       │   │
          │ not rotated          │   │
          └──────────────────────┘   │
                          │           │
                          ▼◄──────────┘
          ┌──────────────────────┐
   S630 ──┤ clear control        │
          │ cycle counter        │
          └──────────────────────┘
                          │
                          ▼
                    ( return )
```

# Fig.20

180°

● target knob position
○ current knob position

# Fig.21

180°

● target knob position
○ current knob position

Fig.22

# Fig.23

```
                    ┌──────────┐
                    │  start   │
                    └──────────┘
                         │
                         ▼
              ┌───────────────────────┐
              │  increment control    │──S310
              │    cycle counter      │
              └───────────────────────┘
                         │
                         ▼
              ┌───────────────────────┐
              │   read  θ, R, R1      │──S320
              └───────────────────────┘
                         │
                         ▼
              ┌───────────────────────┐
              │ compute θ₉ based on R │──S330
              └───────────────────────┘
                         │
                         ▼
              ┌───────────────────────┐
              ║   Δθ=|θ-θ₉|          ║──S342
              └───────────────────────┘
                         │
                         ▼          S343
                    ◇◇◇◇◇◇◇◇◇◇◇◇
     Δθ≤180°      ◇◇    Δθ?    ◇◇     Δθ>180°
    ┌─────────◇◇◇◇            ◇◇◇◇─────────┐
    │              ◇◇◇◇◇◇◇◇◇◇◇◇            │
 S344                                      S346
    ▼                                       ▼
 ◇◇◇◇◇◇       NO              NO        ◇◇◇◇◇◇
◇ θ<θ₉? ◇─────────          ─────────◇ θ<θ₉? ◇
 ◇◇◇◇◇◇            ╲        ╱          ◇◇◇◇◇◇
    │YES            ╲      ╱              │YES
    ▼                ╲    ╱               ▼
┌──────────────┐      ╲  ╱      ┌──────────────┐
│target direction│     ╲╱       │target direction│
│   to right    │     ╱  ╲      │    to left    │
└──────────────┘              └──────────────┘
   S345                           S347
    └──────────────┬────────────────┘
                   ▼
         ┌───────────────────┐
         ║    ΔR=|R-R1|     ║──S350
         └───────────────────┘
                   │
                   ▼
         ┌───────────────────┐
         │   compute δ       │──S360
         └───────────────────┘
                   │
                   ▼
                  ③
```

# Fig.24

③

S370

steering wheel stopped ? — YES

NO — S380

$\delta \leq \delta_0$? — YES

NO — S390

vehicle wheel angle within prohibition range ? — YES

NO — S400

$\Delta R < \Delta Rs$? — NO

YES — S410

vehicle wheel angle in straight line range ? — NO

YES — S420

vehicle speed $\leq 5km/h$? — YES

NO — S440

steering direction=target direction ? — NO

YES

open valve

S450

close valve

S460

return

# Fig.25

M3

+180°
target
steering
wheel
angle θ₈
0°

L

159
target
steering
count
value C₈
80

-180°
LE  leftward
steering
(-)
0
vehicle wheel
angle R
rightward
steering
(+)
RE
0

# Fig.26

180°

● target knob position
○ current knob position

2a  x1
a1
x2  2a
a2

# Fig.27

start

increment control cycle counter ~S310

read $\theta$, R, R1 ~S320

compute $\theta_g$ based on R ~S330

$\Delta\theta = |\theta - \theta_g|$ ~S342

S343

$\Delta\theta \leq 180°$        $\Delta\theta$?        $\Delta\theta > 180°$

S344        S346

$\theta < \theta_g$?    NO        NO    $\theta < \theta_g$?

YES        YES

target direction to right        target direction to left

S345        S347

$\Delta R = |R - R1|$ ~S350

compute $\delta$ ~S360

1

# Fig.28

① S370

steering wheel stopped ? —— YES

NO S380

$\delta \leqq \delta_0$? —— YES

NO S400

NO —— $\Delta R < \Delta Rs$?

YES S420

vehicle speed $\leqq 2km/h$? —— YES

NO

S440

YES —— steering direction=target direction ? —— NO

| open valve | | close valve |

S450 S460

return

# Fig.29(a)

# Fig.29(d)

steering
direction

2a

2a

# Fig.29(b)

# Fig.29(e)

2a

2a

# Fig.29(c)

○ current knob position

● target knob position

⊘ target knob position
when tires are not
twisted

2a

# Fig.30

```
                    ┌─────────────┐
                    │    start    │
                    └──────┬──────┘
                           │
                           ▼
            ┌──────────────────────────┐
            │  increment control       │──S310
            │  cycle counter           │
            └───────────┬──────────────┘
                        │
                        ▼
            ┌──────────────────────────┐
            │      read θ, R           │──S320
            └───────────┬──────────────┘
                        │
                        ▼
            ┌──────────────────────────┐
            │ compute θg based on R    │──S330
            └───────────┬──────────────┘
                        │
                        ▼
            ┌──────────────────────────┐
            │    Δθ=|θ-θg|             │──S342
            └───────────┬──────────────┘
```

S343

$\Delta\theta = |\theta - \theta_g|$ — S342

$\Delta\theta \leq 180°$ ← $\Delta\theta?$ → $\Delta\theta > 180°$

S344 — $\theta < \theta_g?$ — NO ... NO — $\theta < \theta_g?$ — S346

YES ... YES

| target direction to right | target direction to left |

S345 ... S347

compute $\delta$ — S360

②

# Fig.31

② S370
steering wheel stopped ? — YES

NO — S380
$\delta \leq \delta_0$? — YES

NO — S391
opening valve prohibited? — YES

NO — S392
comanding valve to open? — NO

YES — S393
$\theta_s$ changing in opposite direction from steering direction? — YES

NO — S394
$\delta$ enlarged? — YES

NO — S440
steering direction=target direction ? — YES / NO

open valve — S450

close valve — S460

return

54

**Fig.32 (a)**

**Fig.32 (c)**

**Fig.32 (b)**

○ current knob position
● target knob position

steering direction

**Fig.33 (a)**

**Fig.33 (c)**

**Fig.33 (b)**

○ current knob position
● target knob position

steering direction

# Fig.34

# Fig.35

steering wheel
rotation angle

$\theta_{abs}$

cylinder stroke $X_g$

M

# Fig.36

82

82a  0°

82

82a  360°

82

82a  720°

# Fig.37

to right

93

84

to left

81

electromagnetic valve

96

85

86

83

92

95

controller

97

82

87

88

# Fig.38

B (low-slip-type)

steering wheel
rotation speed

orbitrol
efficiency 100%

A (standard-type)

# Fig.39
## (a)

82a

# Fig.39
## (c)

82a

# Fig.39
## (b)

82a

○ current knob position
● target knob position

steering
direction

# Fig.40 (a)

# Fig.40 (d)

steering
direction

82a

82a

# Fig.40 (b)

# Fig.40 (e)

82a

82a

# Fig.40 (c)

82a

○ current knob position

● target knob position

⊘ target knob position
when tires are not
twisted

## INTERNATIONAL SEARCH REPORT

| International application No. |
|---|
| PCT/JP98/01299 |

**A. CLASSIFICATION OF SUBJECT MATTER**
Int.Cl⁶ B62D6/00

According to International Patent Classification (IPC) or to both national classification and IPC

**B. FIELDS SEARCHED**

Minimum documentation searched (classification system followed by classification symbols)
Int.Cl⁶ B62D6/00, B62D5/09

Documentation searched other than minimum documentation to the extent that such documents are included in the fields searched

| | | | |
|---|---|---|---|
| Jitsuyo Shinan Koho | 1926-1998 | Toroku Jitsuyo Shinan Koho | 1994-1998 |
| Kokai Jitsuyo Shinan Koho | 1971-1998 | Jitsuyo Shinan Toroku Koho | 1996-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 2-102871, A (Toyoda Automatic Loom Works, Ltd.), April 16, 1990 (16. 04. 90), Page 2, lower left column, line 1 to page 4, upper right column, line 9 (Family: none) | 1, 5, 6, 7, 17, 19, 20, 23 |
| Y | | 2, 9, 21 |
| X | JP, 1-132469, A (Toyoda Automatic Loom Works, Ltd.), May 24, 1989 (24. 05. 89), Page 2, lower left column, line 6 to page 5, upper right column, line 7 (Family: none) | 1, 5, 6, 7, 19, 20 |
| Y | | 2, 9, 21 |
| X | JP, 63-195064, A (Toyoda Automatic Loom Works, Ltd.), August 12, 1988 (12. 08. 88), Page 2, lower left column, line 10 to page 4, upper left column, line 18 (Family: none) | 1, 5, 7, 19, 20 |
| Y | | 2, 9, 21 |

| [X] Further documents are listed in the continuation of Box C. | [ ] See patent family annex. |
|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| July 6, 1998 (06. 07. 98) | July 14, 1998 (14. 07. 98) |

| Name and mailing address of the ISA/ Japanese Patent Office | Authorized officer |
|---|---|
| Facsimile No. | Telephone No. |

Form PCT/ISA/210 (second sheet) (July 1992)

INTERNATIONAL SEARCH REPORT

International application No.

PCT/JP98/01299

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 4-173479, A (Kayaba Industry Co., Ltd.), June 22, 1992 (22. 06. 92), Page 3, upper left column, line 7 to page 4, upper right column, line 16 (Family: none) | 1, 5, 6, 7, 9, 19, 20, 21 |
| Y . | JP, 4-230473, A (Danfoss A/S), August 19, 1992 (19. 08. 92), Par. Nos. [0006] to [0028] (Family: none) | 1, 5, 6, 7, 9, 19, 20, 21 |
| Y | JP, 3-164372, A (Kayaba Industry Co., Ltd.), July 16, 1991 (16. 07. 91), Page 3, upper left column, line 10 to page 4, upper left column, line 10 (Family: none) | 1, 5, 6, 7, 9, 19, 20, 21 |

Form PCT/ISA/210 (continuation of second sheet) (July 1992)